# FASCICULE DE BREVET EUROPEEN

(11) **EP 0 714 547 B1**
(45) Date de publication et mention de la délivrance du brevet: **23.04.1997**
(21) Numéro de dépôt: 94925517.8
(22) Date de dépôt: 18.08.1994
(51) Int. Cl.: G21C 3/334

(54) **INSTALLATION DE CHARGEMENT D'ASSEMBLAGES COMBUSTIBLES**
VORRICHTUNG ZUR LADUNG VON BRENNSTABBÜNDELN
PLANT FOR LOADING FUEL ASSEMBLIES

(30) Priorité: 20.08.1993 FR 9310159
(43) Date de publication de la demande: 05.06.1996
(73) Titulaire: SOCIETE FRANCO-BELGE DE FABRICATION DE COMBUSTIBLES FBFC, F-92400 Courbevoie (FR)
(72) Inventeur: PICARD, Paul, F-26750 Parnas (FR); VILLAEYS, Roland, F-26100 Romans (FR)
(74) Mandataire: Bouget, Lucien
(86) Numéro de dépôt international: FR9401013
(87) Numéro de publication internationale: WO9506318

(56) Documents cités:
- EP-A- 0 187 268
- EP-A- 0 223 200
- EP-A- 0 284 814
- EP-A- 0 361 794
- GB-A- 2 260 848

## Description

L'invention concerne une installation de chargement d'assemblages combustibles et en particulier une installation de chargement d'assemblages combustibles pour un réacteur nucléaire à eau sous pression.

Les réacteurs nucléaires à eau sous pression comportent un coeur constitué par des assemblages combustibles de forme généralement prismatique qui ont une longueur importante par rapport à leur dimension transversale, cette longueur pouvant être de l'ordre de quatre mètres ou supérieure pour des assemblages ayant une section de forme carrée dont le côté présente une dimension voisine de 0,20 mètre.

Les assemblages combustibles des réacteurs nucléaires à eau sous pression sont constitués d'une ossature ménageant des logements pour un ensemble de crayons combustibles dans des dispositions parallèles, suivant la direction longitudinale de l'assemblage. Les crayons combustibles ont une longueur qui n'est que très peu inférieure à la longueur des assemblages combustibles et un diamètre généralement inférieur à 1 cm.

L'ossature de l'assemblage combustible comporte des grilles-entretoises perpendiculaires à la direction longitudinale de l'assemblage qui permettent de maintenir les crayons combustibles suivant un réseau régulier dans les plans transversaux de l'assemblage.

Les grilles-entretoises sont espacées régulièrement suivant la direction longitudinale de l'assemblage et sont fixées sur des tubes-guides qui se substituent à certains crayons combustibles du réseau de l'assemblage.

Les grilles-entretoises comportent des cellules à l'intérieur desquelles des crayons combustibles sont maintenus transversalement par des bossages et par des ressorts placés en vis-à-vis les uns des autres.

L'ossature de l'assemblage combustible est fermée à ses extrémités par deux embouts dont l'un constitue l'embout inférieur de l'assemblage destiné à venir reposer sur la plaque inférieure de support du coeur et l'autre un embout supérieur sur lequel vient en appui la plaque supérieure du coeur du réacteur, après chargement des assemblages combustibles.

On réalise en usine la fabrication et le montage des ossatures des assemblages combustibles, puis le chargement des ossatures en crayons combustibles. Les crayons combustibles doivent être introduits dans l'ossature par l'une des extrémités de l'assemblage qui ne comporte pas son embout de fermeture.

Le matériau combustible des assemblages qui produit les réactions neutroniques dans le réacteur nucléaire en fonctionnement est consommé progressivement, si bien qu'il est nécessaire d'effectuer périodiquement le rechargement du coeur du réacteur par remplacement d'assemblages usagés par des assemblages neufs.

Les crayons combustibles assurant le chargement des assemblages doivent être introduits dans leurs logements par l'une des extrémités de l'assemblage et glissés à l'intérieur des logements définis par les cellules alignées des grilles-entretoises.

On a proposé de réaliser ces opérations de chargement en introduisant les crayons combustibles un par un et de manière manuelle à l'intérieur de leurs logements.

Ce procédé manuel se traduit par des temps de fabrication des assemblages combustibles extrêmement longs, du fait du grand nombre de crayons par assemblage combustible.

Les assemblages combustibles les plus communément utilisés dans les réacteurs nucléaires à eau sous pression constituent en effet des réseaux de crayons à mailles carrées qui peuvent comporter par exemple quatorze x quatorze ou dix-huit x dix-huit cellules destinées à recevoir les crayons combustibles et les tubes-guides fixés sur les grilles-entretoises. Les assemblages combustibles comportent donc généralement entre deux cents et trois cents crayons combustibles dont il est nécessaire d'assurer le chargement dans l'ossature.

De manière à diminuer la durée de fabrication des assemblages combustibles, il peut être avantageux de disposer d'installations de chargement automatiques des assemblages combustibles.

Les crayons combustibles neufs dont on effectue le chargement dans les assemblages combustibles sont généralement disposés dans des magasins de stockage comportant un réseau de logements qui peuvent être disposés dans l'alignement des logements d'une ossature d'assemblage combustible à remplir par des crayons neufs.

On a proposé par exemple de réaliser le chargement en poussant les crayons pour les faire glisser longitudinalement, depuis une position de stockage à l'intérieur du magasin jusqu'à une position à l'intérieur d'un logement de l'ossature défini par les grilles-entretoises.

Cette opération peut être réalisée de manière automatique et commandée à distance mais du fait de la présence de tubes-guides dans certaines positions du réseau de logements de l'assemblage, il est nécessaire de prévoir une programmation des opérations de chargement tenant compte de la constitution du réseau et du fait que les crayons combustibles ne doivent pas être introduits dans les logements occupés par les tubes-guides.

De plus, dans certains types d'assemblages combustibles, les crayons ne sont pas tous identiques quant à leur nature et à leur enrichissement en matériau fissile et il est nécessaire de tenir compte de la répartition souhaitable des crayons dans la section de l'assemblage, lors du chargement.

En outre, l'introduction par poussée des crayons combustibles à l'intérieur des logements définis par les cellules des grilles-entretoises qui comportent des bossages et des ressorts en saillie vers l'intérieur peut s'accompagner de certaines détériorations de la gaine des crayons qui est en contact frottant avec les bossages et ressorts.

On a proposé de réaliser le chargement des assemblages combustibles par traction sur une extrémité des crayons fermée par un bouchon, en utilisant un dispositif de traction situé dans l'alignement du magasin de stockage des crayons et de l'ossature et comportant une tige de traction dont le diamètre est légèrement inférieur ou égal au diamètre d'un crayon combustible. La tige de traction de grande longueur est introduite à l'intérieur de l'ossature et comporte des moyens de prise à son extrémité qui sont susceptibles d'assurer la liaison entre la tige de traction et un crayon combustible, par l'intermédiaire du bouchon de ce crayon combustible, après passage de la tige de traction à l'intérieur de l'ossature suivant toute sa longueur.

Le déplacement de la tige de traction dans le sens inverse de l'avance en direction du magasin à travers l'ossature permet de glisser le crayon combustible à l'intérieur d'un logement de l'ossature. Les moyens de prise peuvent être associés à des dispositifs permettant d'écarter les ressorts et bossettes pendant le déplacement dans le sens de l'avance et pendant l'introduction du crayon, de sorte que le crayon peut être mis en place avec un frottement réduit et avec une usure limitée de la gaine.

Cependant, dans la mesure où le chargement des crayons doit être réalisé crayon par crayon et de manière programmée, les opérations de chargement des assemblages combustibles sont longues et complexes.

Le but de l'invention est donc de proposer une installation de chargement d'un assemblage combustible constitué d'une ossature ménageant des logements pour un ensemble de crayons combustibles dans des dispositions parallèles et suivant un réseau et comportant des tubes-guides se substituant à certains crayons dans le réseau qui permette de réaliser le chargement d'assemblages en crayons combustibles de manière rapide, sans endommager les crayons et en tenant compte de la position des tubes-guides dans le réseau.

Dans ce but, l'installation de chargement suivant l'invention comporte :
- au moins une ligne de chargement comprenant un support d'ossature et un magasin de stockage de crayons combustibles dans une disposition alignée suivant la direction longitudinale des logements de l'ossature, et
- une unité de chargement comprenant :
   - un support destiné à être mis en place dans la ligne de chargement, dans l'alignement longitudinal du support d'ossature et du magasin de stockage,
   - un chariot monté mobile sur le support, dans la direction longitudinale,
   - une pluralité de moyens de prise de crayons,
   - des moyens de liaison des moyens de prise des crayons et du chariot,
   - une pluralité de moyens commandés de manière sélective pour coopérer avec chacun des moyens de prise de crayons pour permettre l'entraînement du moyen de prise par le chariot ou la retenue du moyen de prise,
   - une unité de sélection pour l'activation sélective d'un sous-ensemble de moyens coopérant avec les moyens de prise, et
   - des moyens de commande des moyens de prise des crayons.

Afin de bien faire comprendre l'invention, on va maintenant décrire, à titre d'exemple non limitatif, en se référant aux figures jointes en annexe, un mode de réalisation d'une installation de chargement suivant l'invention.

La figure 1 est une vue en élévation schématique d'une installation de chargement suivant l'invention pendant le chargement d'une ossature d'assemblage combustible.

La figure 2 est une vue en coupe transversale partielle de l'ossature en cours de chargement dans l'installation représentée sur la figure 1.

La figure 3 est une vue en élévation à plus grande échelle du banc de traction constituant une partie de l'installation représentée sur la figure 1.

La figure 4 est une vue de dessus du banc de traction représenté sur la figure 3.

La figure 5 est une vue d'une partie latérale du banc de traction suivant 5-5 de la figure 4.

Les figures 6A, 6B et 6C sont des vues en élévation de la partie antérieure, de la partie médiane et de la partie postérieure du banc de traction représenté sur la figure 3, respectivement.

Les figures 7A, 7B et 7C sont des vues de dessus de la partie antérieure, de la partie médiane et de la partie postérieure du banc de traction représenté sur la figure 4, respectivement.

La figure 8 est une vue en élévation et en coupe transversale partielle du chariot du banc de traction.

La figure 9 est une vue en élévation latérale montrant des moyens de liaison d'un tirant de prise de crayon combustible et du chariot.

La figure 10 est une vue de côté avec coupe partielle d'un tirant de prise de crayon combustible.

La figure 11 est une vue frontale d'une pince de préhension d'un tirant de prise de crayon combustible.

La figure 12 est une vue en élévation et en coupe par un plan vertical du dispositif de sélection des tirants de prise du banc de traction.

La figure 13 est une vue frontale suivant 13 de la figure 12.

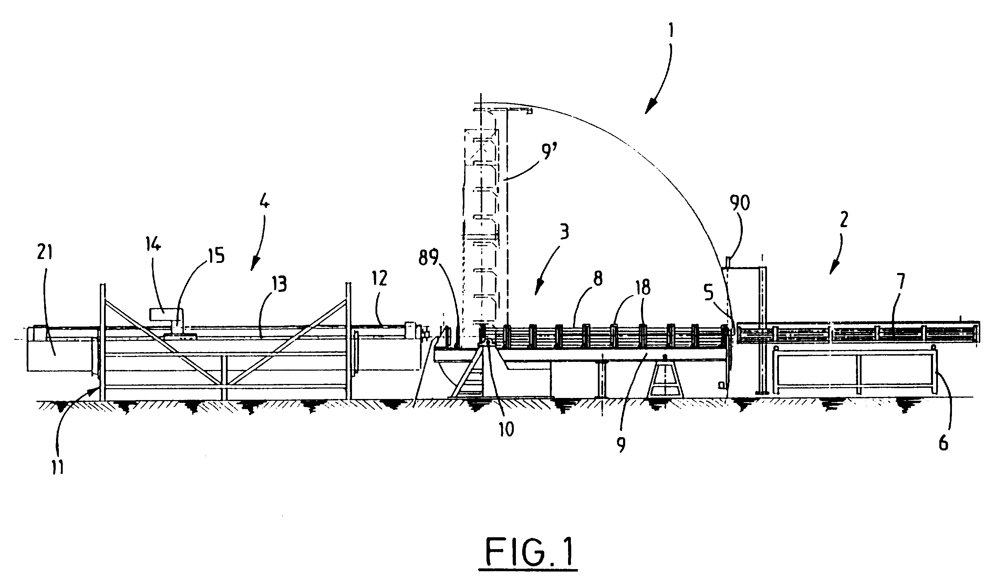

Sur la figure 1, on voit une ligne d'une installation de chargement selon l'invention désignée de manière générale par le repère 1 et comportant trois unités successives 2, 3 et 4 disposées l'une à la suite de l'autre dans une direction longitudinale 5 constituant l'axe de la ligne de chargement suivant lequel on réalise le déplacement par traction des crayons combustibles pour les introduire dans les logements d'une ossature d'un assemblage combustible.

L'unité 2 est constituée par un support 6 sur lequel repose un magasin 7 renfermant des crayons combustibles neufs placés librement dans des alvéoles dans des dispositions parallèles à l'axe 5 de la ligne de chargement, de manière analogue aux crayons combustibles dans une ossature d'assemblage.

L'unité 3 est un banc de support d'une ossature d'un assemblage combustible 8 qui comporte une partie 9 de réception et de maintien de l'ossature de l'assemblage combustible 8 montée basculante autour d'un axe horizontal 10 entre une position horizontale 9, représentée en traits pleins sur la figure 1, et une position verticale 9' représentée en traits interrompus.

Lorsque le support 9 du banc basculant 3 est dans sa position horizontale, l'assemblage combustible 8 est dans une position de chargement, dans laquelle les logements des crayons combustibles constitués par les cellules alignées des grilles 18 de l'assemblage sont parallèles à l'axe 5 et disposés dans le prolongement des crayons neufs dans le magasin 7 de l'unité 2.

Dans la position verticale 9' du support, l'assemblage combustible est placé dans une position verticale permettant d'assurer sa prise par un moyen de manutention pour effectuer l'évacuation de l'assemblage après son chargement.

Après évacuation d'un assemblage dont on a effectué le chargement, on peut venir placer une nouvelle ossature sur le support 9' en position verticale puis rabattre l'ossature en position horizontale 9 pour en assurer le remplissage par des crayons combustibles neufs.

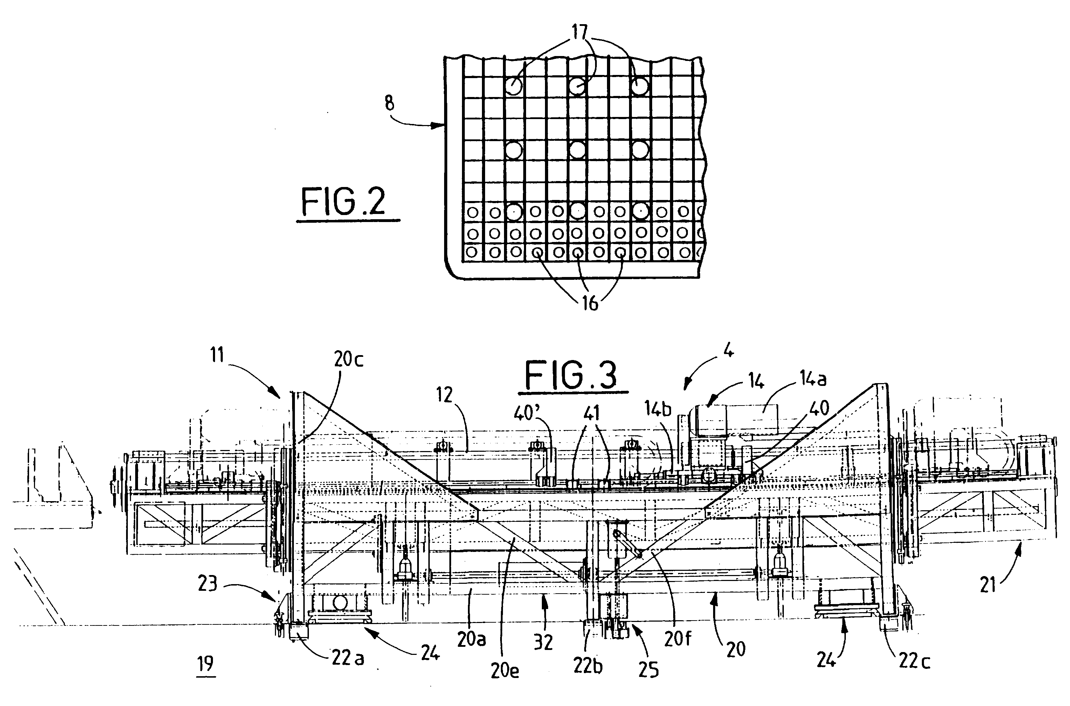

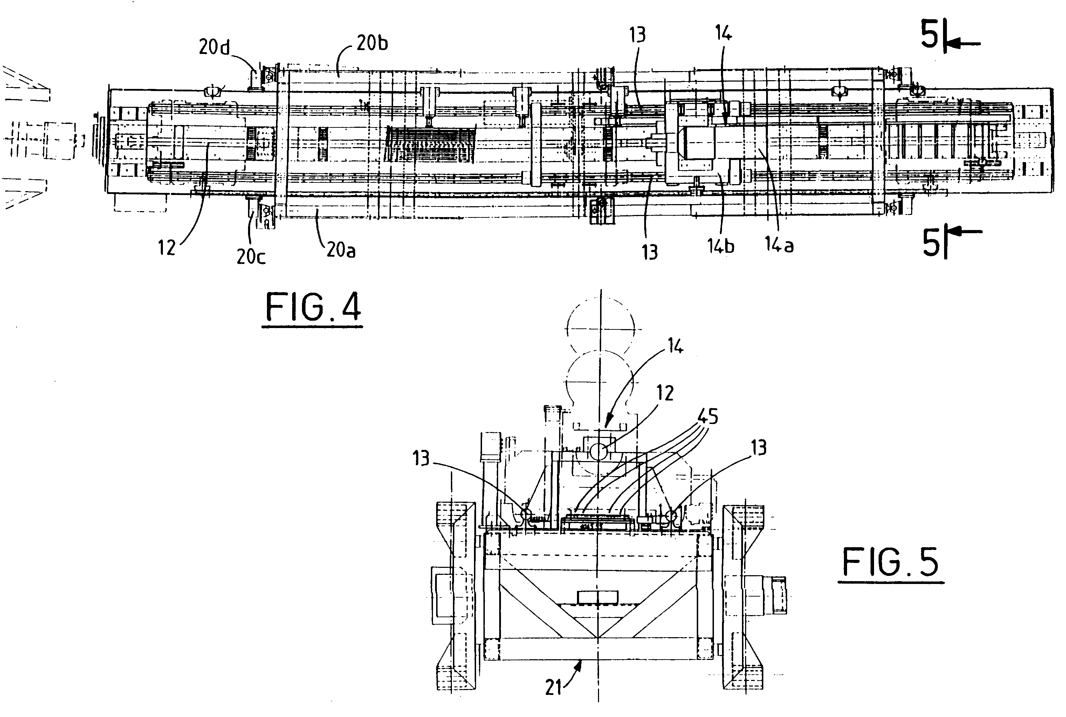

L'unité 4 est une unité de remplissage constituée sous la forme d'un banc de traction qui sera décrit plus en détail en référence aux figures 3 et 4.

De manière générale, le banc de traction 4 comporte un support 11 de grande rigidité disposé dans l'alignement axial 5 de l'unité de stockage 2 des crayons combustibles et du banc basculant comportant le support d'ossature 9 ; le support d'ossature 9 du banc basculant 3 destiné à recevoir l'ossature d'un assemblage combustible 8 est intercalé entre l'unité de stockage 2 comportant le magasin 7 et le banc de traction 4.

Une vis fixe 12 est disposée sur une partie mobile 21 du support 11 dans une disposition parallèle à l'axe 5 de la ligne de chargement et un chariot motorisé 14 est monté mobile, par l'intermédiaire de moyens de guidage longitudinaux 13, sur le support mobile 21 dans la direction de l'axe de chargement 5.

Le moteur du chariot 14 assure l'entraînement en rotation d'un écrou 15 en prise avec la vis 12 et assurant le déplacement du chariot 14 suivant la direction axiale 5 de la ligne de chargement.

Le chariot 14 assure le déplacement dans la direction de chargement 5 de dispositifs de prise et de traction de crayons combustibles constitués par des tirants de grande longueur susceptibles d'être introduits par déplacement du chariot 14 dans un premier sens, à l'intérieur des logements de l'ossature de l'assemblage combustible 8 portée par le support d'ossature 9, suivant toute leur longueur, de manière à présenter une extrémité comportant des pinces de préhension à l'extrémité du magasin 7 située en vis-à-vis de la partie d'extrémité du banc basculant 3. On peut ainsi assurer la prise de crayons combustibles par les moyens de prise après déplacement du chariot 14 dans un premier sens de déplacement.

Dans son second sens de déplacement, le chariot 14 permet de réaliser l'introduction par traction des crayons combustibles à l'intérieur de l'ossature de l'assemblage combustible 8.

Comme il est visible sur la figure 2, l'ossature de l'assemblage combustible 8 définit des logements pour des crayons combustibles 16 disposés suivant un réseau à mailles carrées dans les plans transversaux de l'assemblage, de manière que les crayons 16 soient disposés suivant des nappes successives parallèles entre elles, dans des dispositions horizontales, lorsque l'ossature de l'assemblage combustible 8 est placée en position de chargement.

Certaines positions dans le réseau de logements des crayons combustibles 16 sont occupées par des tubes-guides 17 permettant le déplacement à l'intérieur de l'assemblage, pendant le fonctionnement du réacteur nucléaire, de crayons absorbants de grappes de commande de la réactivité du coeur du réacteur.

Les tubes-guides 17, comme indiqué précédemment, sont fixés par soudage sur les grilles-entretoises 18 de l'ossature dont ils assurent l'assemblage rigide.

De préférence, les crayons combustibles de l'assemblage sont chargés par nappes horizontales successives, les moyens de prise des crayons combustibles entraînés par le chariot 14 étant constitués par un ensemble de n tirants parallèles disposées suivant une nappe plane horizontale, de la même manière que les crayons 16 d'une nappe horizontale, dans le cas d'un assemblage à section carrée comportant n x n logements de crayons.

Comme il est visible sur la figure 2, dans certaines nappes horizontales de crayons 16 sont intercalés des tubes-guides 17 ;lors du remplissage des logements de la nappe correspondante, des crayons combustibles ne doivent pas être introduits dans l'ossature de l'assemblage 8 dans les positions occupées par les tubes-guides 17.

Le banc de tirage 4 comporte à l'une de ses extrémités, un dispositif de sélection permettant de retenir certains dispositifs de prise sélectionnés, lors du déplacement du chariot 14 dans son premier sens de déplacement.

De cette manière, le chargement de l'assemblage combustible peut être réalisé rangée par rangée, en tenant compte des tubes-guides 17 de l'assemblage.

Sur les figures 3 et 4, on a représenté l'unité de chargement 4 constituée sous la forme d'un banc tireur comportant une vis 12 placée dans une disposition longitudinale sur le support mobile 21 du banc tireur placé dans l'alignement de l'axe longitudinal 5 de l'installation de chargement.

Le support 11 comporte une partie fixe 20 munie de moyens 23 pour sa fixation sur le plancher 19 du poste de chargement et le support 21, mobile dans la direction verticale portant la vis 12 et le chariot 14 qui peut être déplacée pas par pas dans la direction verticale pour réaliser le chargement de nappes successives de crayons combustibles dans l'ossature de l'assemblage 8.

Le chariot 14 permet de déplacer les tirants longitudinaux constituant un ensemble de n tirants, si n est le nombre de crayons combustibles dans une rangée horizontale de l'assemblage.

Le support fixe 20 est réalisé sous une forme rigide car il doit supporter des efforts de traction importants pendant le tirage des crayons ; il comporte des longerons horizontaux tels que 20a, 20b reliés entre eux par des traverses et des montants verticaux tels que 20c, 20d à chacune des extrémités longitudinales du support 20. De plus, des renforts tels que 20e et 20f sont disposés dans des positions inclinées et reliés aux longerons et aux montants.

Le support 20 repose sur le plancher 19 de la ligne de chargement, par l'intermédiaire de six pieds tels que 22a, 22b et 22c. Les pieds tels que 22a et 22b situés aux extrémités du support 20 constituent les parties inférieures des montants tels que 20c et 20d et comportent des moyens de fixation amovibles dans le plancher de chargement tels que 23 comportant une tige filetée qui peut être engagée dans une ouverture taraudée d'un bloc d'ancrage fixé dans le plancher 19 de la ligne de chargement.

Le support 20 comporte également quatre patins à coussin d'air tels que 24 permettant de soulever le support 20 au-dessus du plancher 19, lorsque les tiges filetées de fixation des dispositifs 23 ont été démontées.

On peut alors déplacer l'ensemble du support 20 au-dessus du plancher 19, par exemple en utilisant un dispositif tel que le dispositif de déplacement 25 qui sera décrit plus loin pour faire passer le banc de traction 4 d'une première position dans l'alignement d'une première ligne de chargement comportant une unité de stockage de crayons combustibles neufs et un support d'ossature à une seconde position dans l'alignement d'une seconde ligne de chargement parallèle à la première.

On peut ainsi disposer de plusieurs lignes de chargement d'assemblages combustibles desservies par un seul banc de traction.

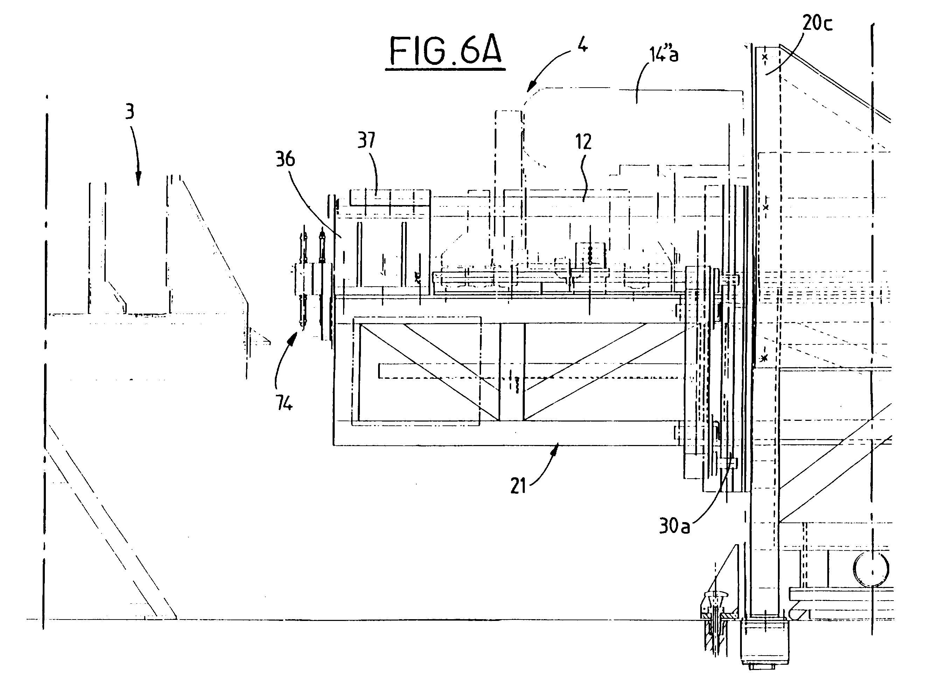

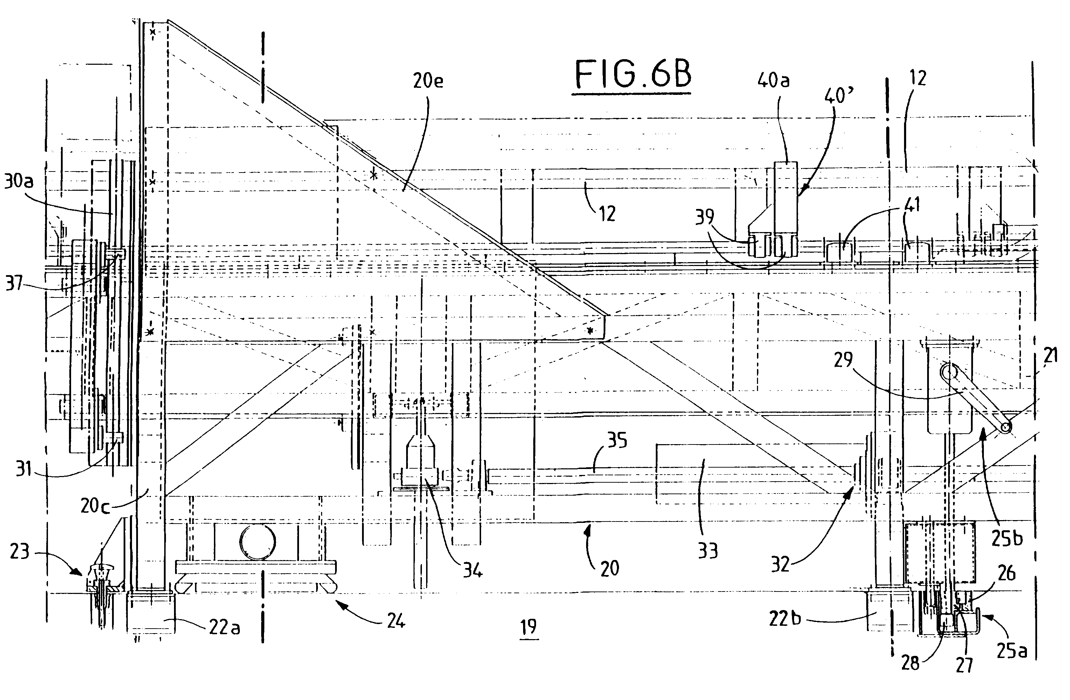

Le dispositif 25 de déplacement du support 20 visible sur la figure 6B du banc de traction 4 comporte des moyens 25a de guidage et d'entraînement disposés dans une tranchée de direction transversale par rapport aux lignes de chargement, en-dessous du niveau supérieur du plancher 19. Les moyens 25a comportent en particulier une glissière et une crémaillère 26 de direction transversale et le support 20 porte un ensemble d'entraînement et de guidage 25b comportant un pignon 27 engrènant avec la crémaillère 26 et un galet de guidage 28 coopérant avec la glissière.

Une manivelle 29 permet d'entraîner en rotation de manière manuelle le pignon 27 pour déplacer transversalement le support 20, lorsque le support 20 et l'ensemble des éléments du banc de traction 4 sont soulevés au-dessus du sol de l'atelier par alimentation en air comprimé des patins à coussin d'air 24.

Le support mobile 21 du banc de traction 4 qui est constitué par des longerons, des traverses, des montants verticaux et des éléments de renforcement inclinés, est réalisé sous la forme d'une structure en treillis de grande rigidité supportant la vis 12 d'entraînement du chariot 14 et les éléments de guidage longitudinaux 13 du chariot.

Le support 21 mobile qui présente une longueur supérieure à la longueur du support 20 est disposé entre les montants verticaux tels que 20c et 20d du support 20 sur lequel sont fixées quatre colonnes de guidage verticales telles que 30a et 30b sur lesquelles sont engagés des paliers de guidage 31 solidaires du support mobile 21, de manière à assurer un guidage du support mobile 21 à l'intérieur du support 20, dans la direction verticale.

Le déplacement du support mobile 21 dans la direction verticale dans un sens ou dans l'autre est assuré par un ensemble de levage 32 porté par le châssis fixe 20. L'ensemble 32 comporte un moteur 33 d'entraînement de deux vérins à vis 34, par l'intermédiaire d'un ensemble d'entraînement comportant des poulies, des tiges de transmission 35 et des pignons.

Les tiges des vérins à vis 34 sont reliées au châssis mobile 21 dont elles assurent le déplacement dans la direction verticale.

On peut réaliser un déplacement pas par pas dans la direction verticale d'une amplitude bien définie correspondant à la distance verticale entre deux nappes successives horizontales de logements de crayons combustibles dans une ossature d'assemblage.

On peut ainsi effectuer, comme il sera décrit plus loin, le chargement d'une ossature d'assemblage combustible par nappes horizontales successives de crayons.

La vis 12 coopérant avec l'écrou 15 du chariot 14 est fixée sur chacune des deux parties d'extrémité du support mobile 21, à l'extérieur du support fixe 20, par l'intermédiaire d'un ensemble de fixation comportant un socle 36 et une chape 37 recouvrant l'extrémité de la vis 12 et fixée par des vis sur le socle 36.

La vis 12 est fixe et l'entraînement du chariot motorisé 14 est assuré par l'intermédiaire d'un écrou à bille 15 entraîné en rotation par le moteur 14a du chariot 14, comme il sera expliqué plus loin.

Les moyens de guidage longitudinaux 13 du chariot 14 sont constitués par deux barres à section circulaire de grande longueur rapportées et fixées sur la partie supérieure du support mobile 21, sensiblement sur toute sa longueur et disposées au-dessus de la surface supérieure du support 21.

Le chariot 14 comporte une base 14b sur laquelle repose un carter dans lequel l'écrou 15 en prise avec la vis 12 est monté rotatif, ce carter servant lui-même de support au moteur 14a du chariot 14.

La base 14b du chariot porte des paliers 38 engagés et montés glissants sur les barres de guidage 13 du chariot 14.

Deux dispositifs 40 et 40' de maintien de la vis 12 sont disposés de part et d'autre du chariot 14. Chacun des dispositifs 40 et 40' comporte quatre paliers 39 analogues aux paliers 38 de la base 14b du chariot montés glissants sur les barres de guidage 13 du chariot 14. Chacun des dispositifs 40 et 40' comporte un montant traversé par une ouverture 40a constituant un palier assurant le montage glissant du dispositif 40 ou 40' sur la vis 12.

Les dispositifs de maintien 40 et 40' de la vis 12 peuvent être entraînés en translation dans la direction longitudinale de la vis 12 et des barres de guidage 13 par le chariot 14.

La base 14b du chariot 14 porte des moyens d'accrochage constitués par des cliquets rappelés par des ressorts, de manière à assurer la liaison entre le chariot 14 et un dispositif 40, lorsque le chariot, lors de ses déplacements, vient en appui sur le dispositif 40.

Lorsque le chariot 14 se déplace dans un sens tel que le dispositif 40 soit disposé à l'arrière du chariot, le dispositif de maintien 40 de la vis 12 relié par le dispositif de liaison au chariot 14 est tiré par celui-ci et accompagne le déplacement du chariot.

Deux butées 41 sont disposées sur la surface supérieure du support mobile 21, au voisinage de sa partie médiane.

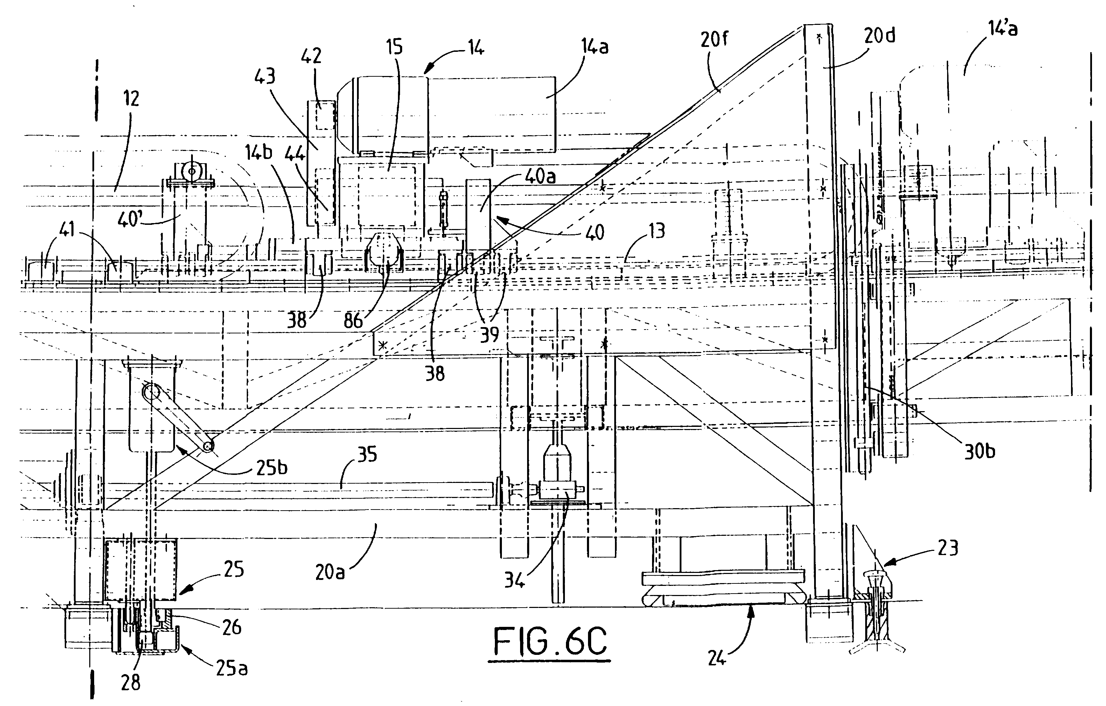

Lorsque le chariot 14 (figure 6) se déplace en direction de la première butée 41, c'est-à-dire de la droite vers la gauche sur la représentation de la figure 6C, le chariot 14 entraîne par traction le dispositif 40 représenté sur la figure qui est relié à la base 14b du chariot 14 par le cliquet rappelé par un ressort.

Lorsque le chariot 14 parvient au niveau de la butée 41, celle-ci provoque le soulèvement du cliquet à l'encontre du ressort de rappel et la libération de la liaison entre le dispositif de maintien 40 et le chariot 14.

Le chariot continuant à se déplacer de la droite vers la gauche, le dispositif de maintien 40 reste en place légèrement en aval de la butée 41, de manière à assurer le maintien de la vis 12 dans sa partie médiane.

Le chariot 14 rencontre alors le second dispositif de maintien 40' représenté sur la figure 6B. Le chariot assure l'entraînement du dispositif 40' par poussée, le cliquet actionné par la seconde butée 41 étant venu en prise sur une partie d'accrochage du dispositif de maintien 40'. Le chariot 14 peut se déplacer jusqu'à une position extrême 14"a représentée sur la figure 6A, en étant accompagné par un dispositif de maintien 40' de la vis qui est également maintenue par un second dispositif de maintien 40 restant en position fixe dans une position voisine de la partie médiane de la vis 12. On assure ainsi un maintien efficace de la vis 12 pour éviter son fléchissement sous l'effet de son propre poids, ce fléchissement pouvant être relativement important du fait de la très grande longueur de la vis 12 nécessaire pour assurer le déplacement du chariot sur une longueur assurant la prise et la mise en place par traction des crayons combustibles dans l'ossature d'assemblage dont on effectue le remplissage.

Le dispositif de maintien 40 ou 40' qui accompagne le chariot dans ses déplacements dans un sens et dans l'autre et le second dispositif de maintien 40 ou 40' restant en place au voisinage de la partie médiane de la vis 12, permettent d'éviter également la mise en vibration de la vis, lors des déplacements du chariot.

Comme il est visible sur la figure 6C, le chariot 14 comporte un moteur 14a dont l'arbre de sortie porte une poulie 42 réalisée sous la forme d'une roue dentée sur laquelle engrène une courroie dentée 43 en prise avec une seconde roue dentée 44 assurant l'entraînement en rotation de l'écrou à bille 15 en prise avec la vis 12.

Le moteur 14a du chariot permet donc de mettre en rotation, par l'intermédiaire de la courroie dentée 43, l'écrou à bille 15 assurant l'entraînement en translation du chariot 14 guidé par les paliers 38 engagés sur les barres de guidage longitudinales 13.

L'utilisation d'une vis fixe et d'un chariot motorisé présente des avantages substantiels par rapport à l'utilisation d'une vis rotative, en particulier dans le cas d'une vis de très grande longueur d'un banc de traction de crayons dont l'amplitude de déplacement du chariot et donc la longueur est supérieure à quatre mètres.

Le chariot 14 assure le déplacement des dispositifs de prise des crayons sur une longueur suffisante dans la direction axiale 5 de la ligne de chargement (voir figure 1), soit dans le sens allant du banc de traction 4 vers le magasin 2, pour assurer la prise de crayons neufs dans le magasin, soit dans le sens inverse, pour assurer la traction des crayons et leur mise en place dans l'ossature de l'assemblage 8.

Le premier sens de déplacement du chariot 14 correspond au sens de déplacement allant de la droite vers la gauche sur les figures 6A, 6B et 6C, le chariot se déplaçant entre une première position extrême 14'a (figure 6C) et une seconde position extrême 14"a (figure 6A) qui correspondent respectivement à la position d'accrochage des dispositifs de prise des crayons et à la position de prise des crayons par les dispositifs de prise.

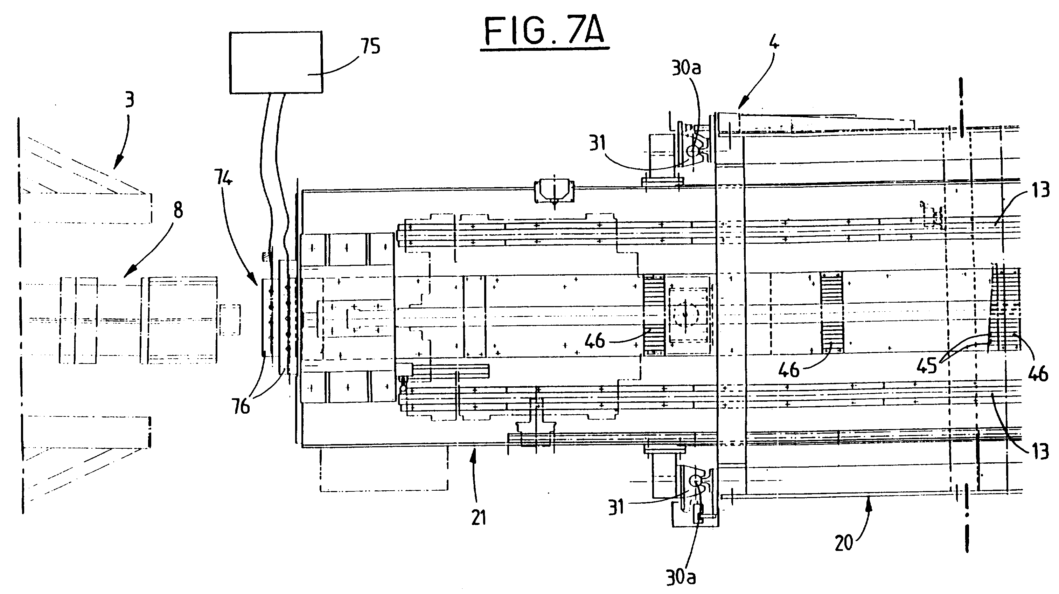

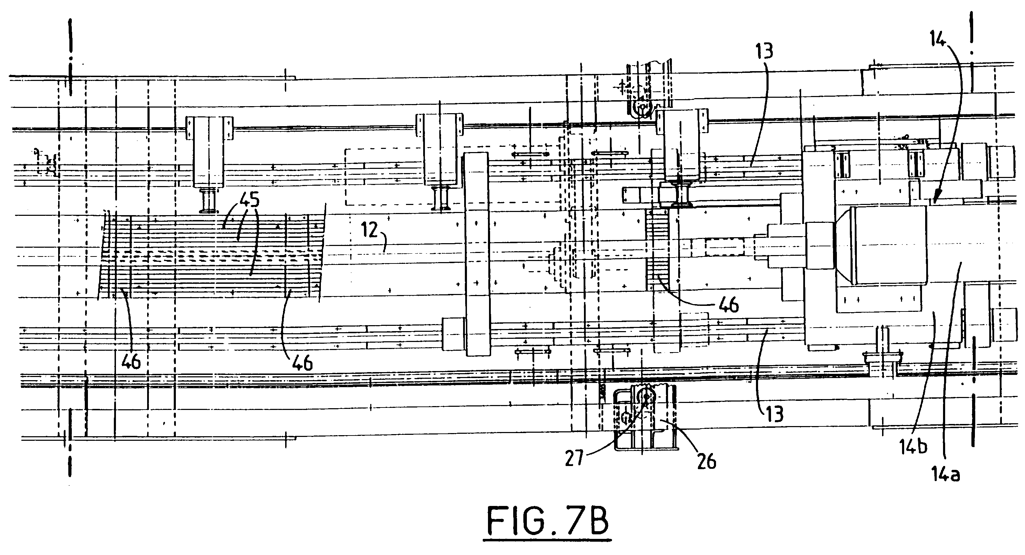

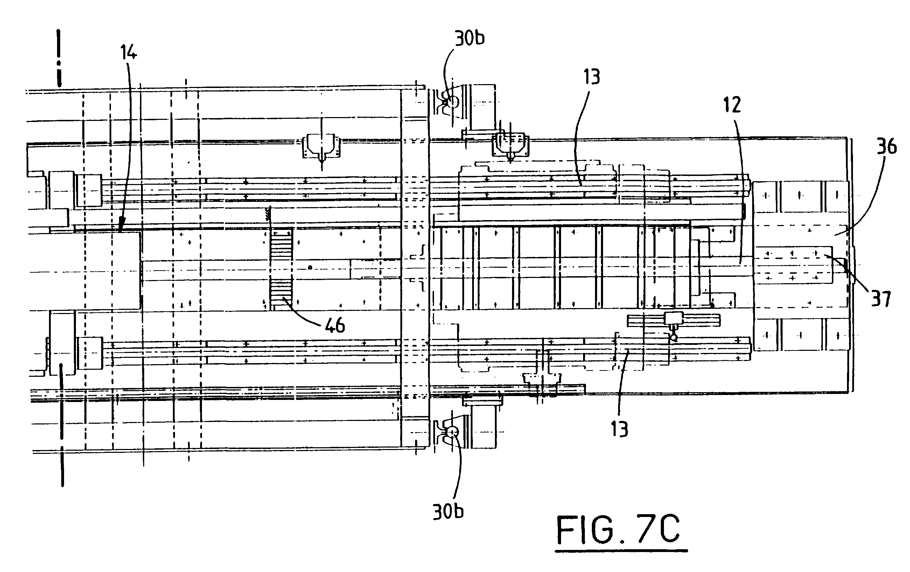

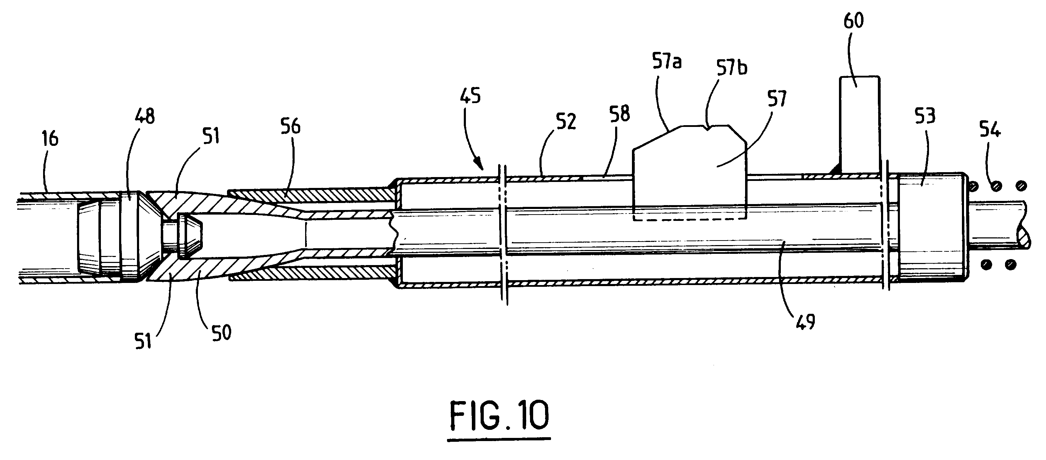

Comme il est visible sur les figures 7A, 7B et 7C, les dispositifs de prise des crayons sont constitués par des tirants 45 représentés partiellement d'une longueur sensiblement égale à la longueur du support 21 dont la structure sera décrite plus loin en se référant à la figure 10.

Les tirants 45 sont placés côte à côte dans une disposition semblable à la disposition des crayons 16 dans une nappe horizontale de crayons, comme représenté sur les figures 2 et 5 et présentent des diamètres légèrement inférieurs aux diamètres des crayons combustibles destinés à remplir l'ossature de l'assemblage 8.

Dans le cas d'un assemblage comportant n x n crayons combustibles, n étant par exemple égal à 14, les nappes horizontales de crayons 16 comportent n crayons et on utilise un ensemble de n tirants 45 parallèles qui sont guidés sur la surface supérieure du support 21 par des peignes de guidage 46 répartis suivant la direction longitudinale du support 21.

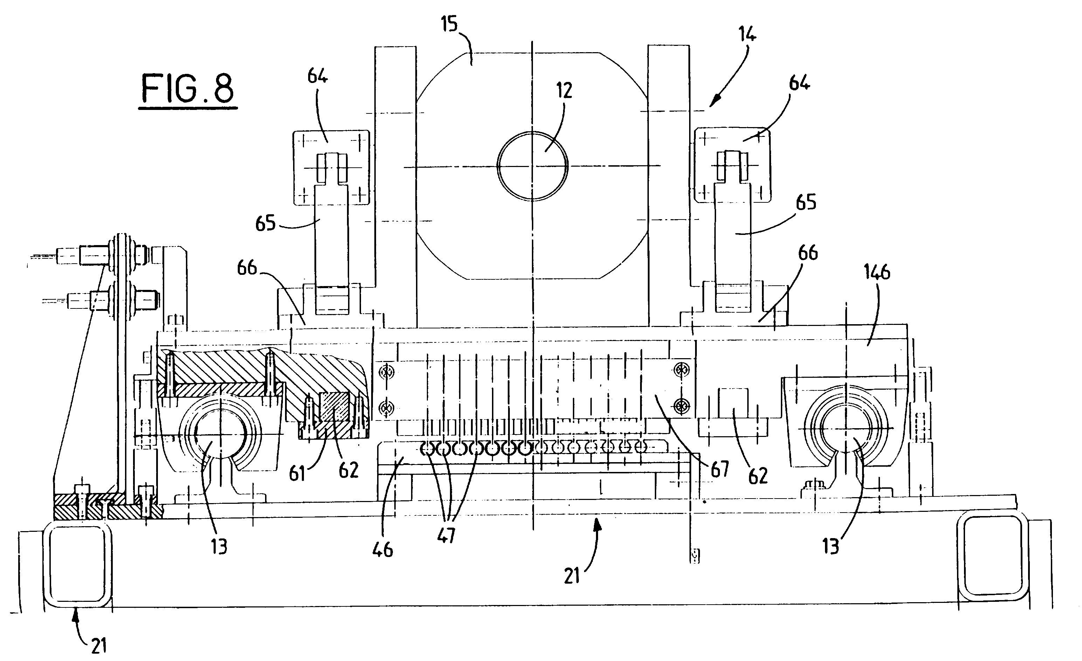

Sur la figure 8, on a représenté un peigne de guidage 46 d'un ensemble de tirants qui comporte quatorze logements circulaires 47 placés côte à côte pour assurer chacun le guidage d'un tirant.

Chacun des logements circulaires 47 est ouvert à sa partie supérieure pour laisser le passage à un drapeau de fixation et d'entraînement du crayon, comme il sera expliqué plus loin.

Sur la figure 10, on a représenté un tirant d'accrochage et de traction dans sa position en prise sur un bouchon 48 d'un crayon combustible 16 pour assurer son chargement dans l'ossature d'un assemblage combustible.

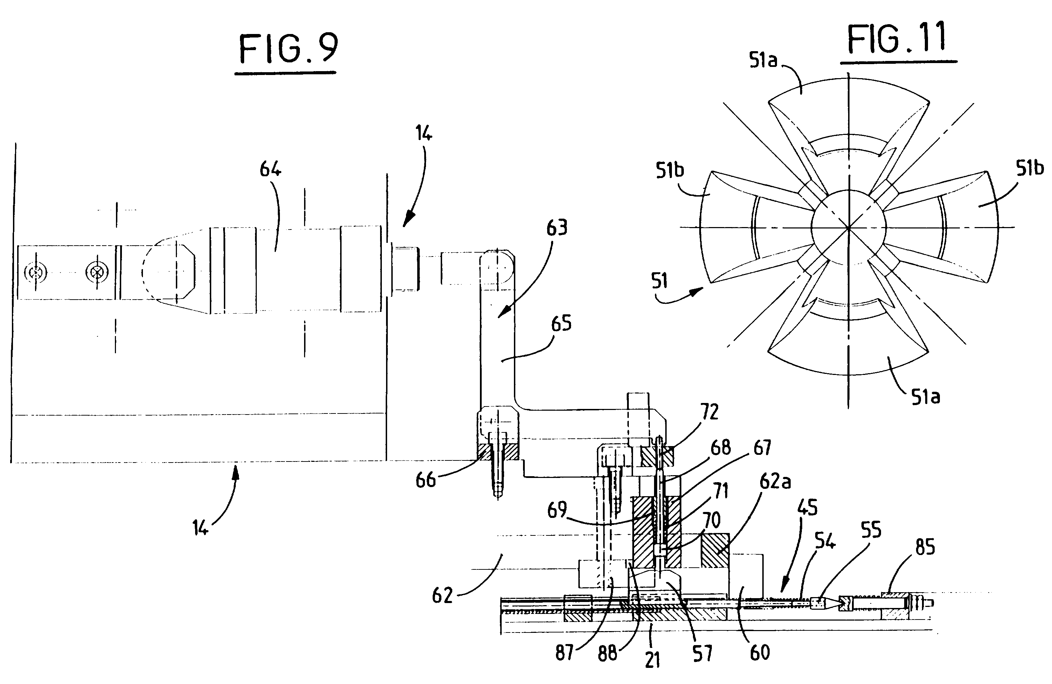

Sur la figure 9, on a représenté les moyens d'accrochage d'un tirant 45 sous le chariot 14 pour assurer son déplacement dans la direction longitudinale du support 21 du banc de traction 4.

Comme il est visible sur la figure 10, le tirant 45 comporte une partie interne constituée sous la forme d'une tige 49 et une partie externe 52 réalisée sous la forme d'une gaine tubulaire 52.

La tige interne 49 est solidaire, à sa partie antérieure, d'une partie tubulaire fendue et usinée pour constituer d'une pince 51 d'accrochage d'un bouchon 48 d'un crayon combustible 16.

Sur la partie arrière de la tige 49 est fixé un embout d'extrémité 55 (visible sur la figure 9).

L'extrémité postérieure de la partie externe tubulaire 52 du tirant 45 est solidaire d'une pièce annulaire 53 montée glissante sur la tige 49.

Un ressort hélicoïdal 54 est intercalé entre la pièce annulaire 53 solidaire de la partie externe 52 du tirant 45 et l'embout d'extrémité 55 solidaire de la tige interne 49.

Le ressort hélicoïdal 54 assure le rappel de la partie tubulaire externe 52 du tirant 45 vers la partie antérieure du tirant 45 comportant les lames de pince 51.

La partie externe tubulaire 52 du tirant 45 est solidaire à sa partie antérieure d'un mors de serrage 56 permettant de maintenir les lames de pince 51 en position de fermeture, lorsque la partie externe tubulaire 52 du tirant 45 est rappelée vers l'avant par le ressort hélicoïdal 54. Les lames de pince 51 sont alors en position de fermeture, comme représenté sur la figure 10.

En particulier, dans cette position de fermeture, les lames de pince 51 peuvent assurer la liaison du tirant 45 avec le bouchon 48 d'un crayon 16.

La tige 49 constituant la partie interne du tirant 45 est solidaire d'une plaque 57 appelée drapeau de tirage qui est fixée dans une direction radiale par rapport à la tige 49 et à la gaine tubulaire externe 52 du tirant 45.

La gaine tubulaire externe 52 comporte une fente longitudinale 58 dont la longueur est supérieure à la longueur axiale du drapeau de tirage 57.

Le drapeau de tirage 57 est engagé dans la fente 58 de la gaine 52 et présente une partie profilée en saillie à l'extérieur de la gaine 52.

La partie profilée du drapeau de tirage 57 en saillie à l'extérieur de la gaine 52 comporte en particulier une rampe inclinée 57a et une cavité 57b permettant le blocage du drapeau et de la tige 49 du tirant, comme il sera expliqué en regard de la figure 9.

Une plaque de manoeuvre 60 ou drapeau d'ouverture est également fixée dans une disposition radiale et en saillie par rapport à sa surface externe, sur la gaine 52 du tirant 45, au voisinage de sa partie postérieure.

Comme il est visible sur les figures 8 et 9, l'embase 14b du chariot 14 porte par l'intermédiaire de glissières 61, un cadre de manoeuvre 62 qui est monté mobile sur le chariot dans la direction longitudinale de déplacement du chariot correspondant à la direction des barres de guidage 13.

Le cadre 62 peut être déplacé dans la direction longitudinale par un vérin de manoeuvre porté par le chariot 14 (non représenté).

Le cadre mobile 62 du chariot 14 comporte une traverse antérieure 62a (figure 9) qui peut venir en appui sur les drapeaux d'ouverture 60 des gaines tubulaires externes de l'ensemble des tirants 45 disposés côte à côte suivant la longueur du support 21 et maintenus par les peignes 46 comportant les logements 47.

Les tirants 45 sont maintenus par les peignes 46 sur la surface supérieure du support 21, de manière que les drapeaux d'ouverture 60 soient dirigés dans la direction verticale et vers le haut, comme représenté sur la figure 9.

Lors des déplacements du chariot et des tirants, les drapeaux d'ouverture 60 peuvent glisser à l'intérieur des ouvertures prévues à la partie supérieure des logements 47 des peignes 46.

Comme il est visible sur les figures 8 et 9, le chariot 14 porte un ensemble de blocage et d'accrochage des tirants qui sera désigné dans son ensemble par le repère 63.

Le dispositif de blocage et d'accrochage 63 comporte deux vérins 64 fixés de part et d'autre du chariot 14, dans la direction longitudinale sur les faces latérales externes du carter de l'écrou à bille 15. Les tiges des vérins 64 sont reliées de manière articulée chacune à l'extrémité d'une branche d'un levier coudé 65 comportant deux branches à 90° et monté pivotant autour d'un axe horizontal sur le chariot 14, par l'intermédiaire de paliers 66.

Sur l'embase 14b du chariot 14 est monté d'autre part un bloc de guidage 67 d'un ensemble de tiges 68 d'accrochage des tirants 45.

Chacune des tiges 68 est montée glissante à l'intérieur d'un fourreau 69 inséré dans une ouverture verticale traversant le bloc de guidage 67.

Chacune des tiges 68 comporte une partie inférieure élargie diamétralement dont l'extrémité présente une forme hémisphérique.

Un ressort hélicoïdal 71 intercalé entre le fourreau 69 et la partie élargie 70 de la tige 68 permet de rappeler la tige 68 vers le bas en direction d'un tirant 45, pour assurer l'accrochage de ce tirant.

Lorsque le chariot 14 est déplacé en direction de l'extrémité arrière des tirants 45 disposés côte à côte sur le support 21 du banc de traction, l'extrémité inférieure 70 de chacune des tiges 68 rappelée vers le bas vient en contact avec la rampe inclinée 57a d'un drapeau de tirage 57 qui repousse la tige 68 vers le haut en comprimant le ressort 71.

Lorsque l'extrémité sphérique de la partie 70 de la tige 68 parvient au niveau de la cavité 57b du drapeau 57 du tirant 45, le ressort 71 assure le rappel de la tige 68 vers le bas et l'introduction de l'extrémité sphérique de la partie 70 de la tige dans la cavité 57b du drapeau de tirage 57. On assure ainsi une liaison entre le chariot 14 et le tirant 45.

Lorsque le chariot est amené à se déplacer vers l'avant, c'est-à-dire en direction du support d'ossature et du magasin de crayons combustibles, les tirants 45 sont entraînés par le chariot en direction du support d'ossature.

La branche du levier coudé 65 qui n'est pas reliée aux tiges de manoeuvre des vérins 64 porte un ensemble de pions de blocage 72 qui sont engagés dans une partie du bloc de guidage 67, chacun dans l'alignement axial d'une tige d'accrochage 68 d'un tirant 45.

Lorsque les vérins 64 sont actionnés de manière que leurs tiges viennent en position extraite, le levier coudé 65 pivote et met en appui les pions de blocage 72 contre l'extrémité des tiges 68 d'accrochage des tirants. Les tiges 68 sont alors totalement bloquées et ne peuvent plus se déplacer à l'intérieur du fourreau 69. On réalise ainsi un blocage de la tige 49 des vérins constituant la partie interne de ces vérins.

En revanche, les gaines externes tubulaires 52 des tirants 45 peuvent être déplacées axialement par rapport aux tiges 49 en exerçant une poussée sur les drapeaux d'ouverture 60 par l'intermédiaire du cadre glissant 62 du chariot 14.

En actionnant le vérin de déplacement du cadre 62 de manière à déplacer le cadre vers l'arrière, on exerce une poussée sur les drapeaux d'ouverture 60 et la gaine tubulaire externe 52 des tirants 45 qui se déplace vers l'arrière en comprimant les ressorts 54.

Les mors de serrage 56 des lames de pince sont déplacés vers l'arrière et libèrent les lames 51 qui s'écartent les unes des autres du fait de leur élasticité. On obtient ainsi une ouverture de la pince.

Chacune des pinces peut alors être engagée sur la partie d'accrochage d'un bouchon 48 d'un crayon combustible par déplacement du tirant correspondant dans la direction axiale.

La fermeture des pinces est obtenue par déplacement du cadre 62 dans la direction inverse de la direction précédente, c'est-à-dire vers l'avant des tirants. La gaine externe 52 et le mors 56 du tirant 45 sont alors rappelés vers l'avant par le ressort 54. On obtient ainsi une fermeture des lames de pince sur un bouchon 48, comme représenté sur la figure 10.

On peut alors relâcher la pression des vérins 64, de manière à libérer les tiges d'accrochage 68 des tirants qui sont rappelées vers le bas par les ressorts 71 et dont la partie d'extrémité est maintenue dans les cavités 57b d'accrochage des drapeaux de tirage 57.

Par déplacement du chariot 14, on peut ainsi réaliser un déplacement des tirants 45 dans la direction longitudinale.

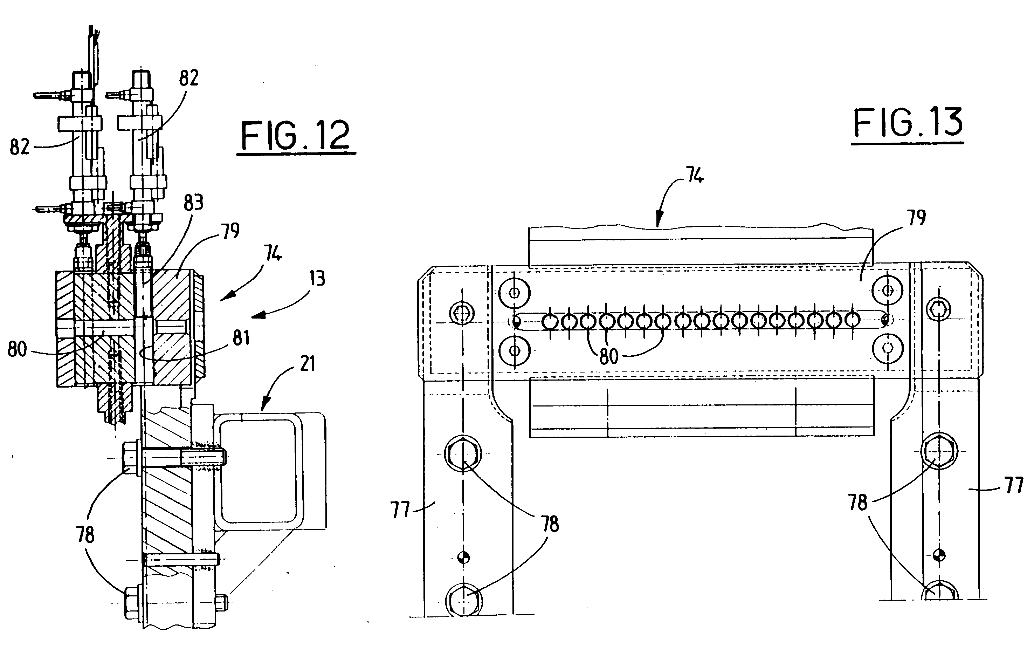

Comme il est visible sur la figure 11, les lames des pinces d'accrochage 51 des tirants 45 constituant la partie d'extrémité des tiges internes 49 constituent deux paires de lames 51a et 51b placées dans des positions opposées par rapport à l'axe du tirant, les lames 51 de la paire 51a présentant une largeur supérieure aux lames de la paire 51b.

Les lames 51b ne comportent pas de bec d'accrochage mais simplement une surface interne inclinée permettant de réaliser le guidage de la pince sur la partie d'extrémité tronconique de bouchon 48 d'un crayon combustible 16, lors d'un déplacement de faible amplitude du tirant 45 pour réaliser la mise en place des lames 51. Les lames de la paire 51a comportent des becs d'accrochage qui viennent, en fin de mise en position de la pince, en vis-à-vis de la gorge d'accrochage du bouchon 48.

En libérant la gaine externe 52 des tirants par manoeuvre des vérins 64, on provoque le rappel de cette gaine et du mors de serrage 56 sur les lames 51, les becs de la paire de lames 51a venant s'engager dans la gorge du bouchon 48.

Comme il est visible en particulier sur les figures 6A, 7A, 12 et 13, un bloc 74 de sélection des tirants 45 est fixé à la partie avant du support 21, c'est-à-dire la partie du support 21 située en vis-à-vis du support d'ossature 3 de la ligne de chargement d'assemblages combustibles.

Le bloc de sélection 74 qui comporte deux lignes de vérins 76 est relié à une unité de programmation électropneumatique 75 visible sur la figure 7A permettant d'alimenter sélectivement les vérins des lignes de vérins 76 du bloc 74 pour réaliser la sélection des tirants 45 utilisés lors d'une opération de chargement d'une nappe de crayons combustibles dans l'ossature de l'assemblage 8.

En effet, comme il a été expliqué en se référant à la figure 2, les nappes de crayons horizontales à introduire dans l'assemblage peuvent être incomplètes du fait de la présence de tubes-guides intercalés dans certaines rangées horizontales de crayons. Le plan de remplissage de l'assemblage combustible est mis en mémoire dans une unité de programmation de l'unité électrohydraulique 75, de manière à assurer, pour chacune des opérations de déplacement des tirants 45, comme il sera expliqué plus loin, la sélection des tirants utilisés pour réaliser la mise en place par traction de crayons combustibles.

Le bloc de sélection 74 comporte deux pattes de fixation 77 qui permettent la fixation par des vis 78 du corps 79 du bloc de sélection 74, sur l'extrémité antérieure du support 21.

Le corps 79 du bloc de sélection 74 est percé de canaux 80 parallèles et disposés côte à côte dont le diamètre est supérieur au diamètre extérieur d'un tirant 45 et d'un crayon combustible 16 de garnissage de l'assemblage combustible 8.

Les canaux 80 sont disposés de manière que leurs axes se trouvent dans l'alignement exact des axes des tirants 45 reposant sur le support 21 et guidés par les peignes 46.

Dans le cas d'un assemblage combustible comportant n x n crayons combustibles, le bloc 79 est percé de n canaux de traversée 80.

Dans chacun des canaux 80 débouche une ouverture 81 dont l'axe est perpendiculaire à l'axe du canal 80.

Les ouvertures 81 constituent deux ensembles d'ouvertures alignées traversant respectivement chacune des deux parties 76 du bloc de sélection 74.

Deux rangées de vérins 82 sont disposés sur la face supérieure du corps 79 du bloc 74, de manière que l'axe d'actionnement de ces vérins se trouve dans l'alignement d'axes d'ouvertures 81.

On dispose deux séries de vérins alignés sous la face inférieure du corps 79 du bloc 74, dans l'alignement d'ouvertures 81 des deux rangées d'ouvertures.

A chacune des ouvertures 81 est associé un vérin 82 dont la tige est alignée avec l'axe de l'ouverture 81.

La disposition des vérins suivant deux rangées au-dessus et en-dessous du bloc 74 permet d'assurer le positionnement des vérins malgré leur encombrement, compte tenu du faible écartement des canaux 80 et des ouvertures 81.

Sur chacune des tiges des vérins 82 est fixé un pion de blocage 83 dont le diamètre est légèrement inférieur au diamètre des ouvertures 81.

Le pion de blocage 83 fixé à l'extrémité de la tige de vérin 82 est monté glissant dans l'ouverture 81 de manière que le vérin puisse déplacer le pion 83 entre une position d'ouverture du canal 80 correspondant (position représentée sur la figure 12) et une position de fermeture du canal 80 dans laquelle le pion de blocage 83 s'étend en travers du canal 80.

Lorsqu'un tirant 45 entraîné par le chariot 14 dans son premier sens de déplacement parvient au niveau d'un canal 80 du bloc de sélection 74, la partie antérieure du tirant 45 constitué par les lames de pince 51 peut traverser le canal 80 dans le cas où ce canal est ouvert.

Le tirant 45 peut alors être introduit par déplacement continu du chariot à l'intérieur de l'ossature de l'assemblage combustible 8 reposant sur le support d'ossature 3. Les tirants pénètrent dans les logements d'une rangée horizontale de crayons qui sont alignés avec les tirants 45.

Lorsque l'extrémité antérieure d'un tirant 45 pénètre dans un canal 80 fermé par un pion de blocage 83, cette partie antérieure vient en butée contre le pion 83, ce qui arrête le déplacement longitudinal du tirant 45. Le chariot 14 poursuit son déplacement vers l'avant, la partie d'extrémité 70 de la tige 68 de maintien du tirant 45 rappelée par le ressort 71 se soulevant de manière à sortir de la cavité 57a du drapeau 57 du tirant 45 et à libérer le tirant 45. Le tirant 45 qui correspond à une position dans la nappe de tubes occupée par un tube-guide reste en place et n'est pas entraîné en direction du support d'ossature.

On peut donc sélectionner à chacun des déplacements du chariot entraînant les tirants, le sous-ensemble de tirants 45 nécessaire pour assurer le garnissage de la rangée de logements, en tenant compte de la position des tubes-guides.

Il est à noter qu'on arrête le chariot au moment où l'extrémité antérieure des tirants parvient à l'extrémité antérieure du banc de tirage, en vis-à-vis du support d'ossature, de manière à placer des capuchons de protection sur la partie antérieure des tirants constituée par les pinces 51. Les capuchons de protection des tirants permettent, lors du déplacement ultérieur des tirants à l'intérieur de l'ossature de l'assemblage, d'assurer l'écartement des ressorts dans chacune des cellules des grilles-entretoises définissant le logement correspondant.

On peut utiliser en particulier, pour effectuer la pose des capuchons, le dispositif automatique faisant l'objet de la demande de brevet FR-A-2 690 554.

Après garnissage des extrémités antérieures des tirants 45 par des capuchons, on assure le redémarrage du chariot 14 qui poursuit son déplacement vers l'avant en entraînant les tirants 45.

Dans le cas d'un blocage accidentel d'un tirant à l'intérieur d'un logement d'ossature d'assemblage combustible, la partie d'extrémité 70 de la tige d'entraînement 68 du tirant peut se soulever de manière à libérer la liaison entre le chariot et le tirant bloqué accidentellement. On évite ainsi tout risque de détérioration des tirants et des grilles-entretoises de l'assemblage combustible.

Le déplacement du chariot 14 vers l'avant est poursuivi jusqu'au moment où les parties antérieures des tirants 45 sélectionnés constituées par les lames de pince 51 de ces tirants parviennent au-delà de l'extrémité de l'ossature de l'assemblage combustible opposée à l'extrémité d'entrée située en vis-à-vis du banc de traction 4.

Les parties antérieures des tirants recouvertes par les capuchons sont alors à proximité et en vis-à-vis des bouchons 48 des crayons combustibles 16 disposés dans une rangée du magasin de stockage 7 de crayons combustibles à partir duquel on réalise le chargement de l'ossature d'assemblage. On arrête alors le chariot, on enlève les capuchons des tirants et on réalise le blocage des parties internes des tirants 45, par l'intermédiaire des drapeaux de tirage 57, par manoeuvre des vérins de blocage 64.

On réalise alors l'ouverture des pinces par manoeuvre du cadre 62 en appui sur les drapeaux 60 solidaires de la gaine externe 52 des tirants 45.

La gaine tubulaire 52 de chacun des tirants 45 est déplacée vers l'arrière, de manière que le mors 56 libère les lames de pince 51 qui peuvent alors se placer en position d'ouverture, du fait de leur élasticité.

Le déplacement relatif de la gaine tubulaire 52 par rapport à la tige interne 49 du tirant 45 est rendu possible du fait que la fente 58 présente une longueur sensiblement supérieure à la longueur du drapeau de tirage 57 dans la direction longitudinale du tirant.

On réalise alors le déplacement du chariot vers l'avant qui entraîne l'ensemble des tirants sélectionnés dont les pinces ont été placées en position d'ouverture.

Comme expliqué précédemment, les pinces 51 des tirants 45 viennent s'engager sur les bouchons 48 des crayons 16 sélectionnés dans la rangée de crayons du magasin.

On déplace alors le cadre 62 monté glissant sur le chariot 14 dans la direction allant vers la partie antérieure des tirants 45.

Les ressorts 54 des tirants 45 assurent le retour élastique des gaines tubulaires 52 vers l'avant des tirants, de sorte que les mors 56 réalisent le serrage des pinces 51 des tirants 45 sur les bouchons 48 des crayons combustibles 16.

On manoeuvre les vérins 64 de manière à libérer les tiges 68, de sorte que les tirants soient reliés au chariot 14 par l'intermédiaire des tiges 68 dont la partie d'extrémité 70 est rappelée par les ressorts 71 dans les cavités des drapeaux 57 des tirants correspondants.

On commande alors le déplacement du chariot vers l'arrière, c'est-à-dire dans la direction opposée au support d'ossature 3, dans la ligne de chargement d'assemblages combustibles.

Les tirants 45 se déplacent à l'intérieur des logements de l'ossature et assurent l'introduction par traction des crayons combustibles 16 dans les logements de l'ossature.

Dans le cas du blocage d'un tirant, au niveau d'une grille-entretoise de l'ossature, la liaison entre le chariot et le tirant peut être interrompue par échappement de la partie d'extrémité 70 de la tige 68 de liaison entre le chariot 14 et le tirant 45.

Dans le cas du tirage des crayons, les efforts sont transmis aux drapeaux de tirage 57 par une barre de poussée 87 solidaire du chariot 14. Un capteur d'effort ou de pression 88 est intercalé entre la barre 87 et chacun des drapeaux de tirage 57. Lors du tirage des crayons, si un crayon se bloque dans l'ossature de l'assemblage, on enregistre un effort supérieur à une limite fixée sur le capteur correspondant. On interrompt alors l'opération de tirage des crayons en arrêtant le chariot 14.

L'ensemble des crayons combustibles d'une nappe de crayons horizontale de l'assemblage peut donc être mis en place simultanément à l'intérieur de l'ossature, sans risque de détérioration du fait de la mise en place par traction avec un parfait guidage et des sécurités antiblocage.

Lorsque le chariot est parvenu dans une position qui a été repérée en fonction de la longueur des crayons à mettre en place dans l'ossature, on arrête le déplacement du chariot et on réalise le desserrage des pinces et la séparation des tirants et des crayons combustibles.

Les tirants peuvent être ramenés dans leur position extrême à l'arrière du châssis 21, dans laquelle l'embout 55 du tirant vient en appui sur une butée élastique 85, comme il est visible sur la figure 9.

Des caméras telles que 89 et 90 (figure 1) permettent de contrôler à distance le passage des tirants et l'accrochage et le passage des crayons combustibles de part et d'autre du banc basculant 3.

Comme il est visible en particulier sur la figure 6C, l'embase 14b du chariot 14 porte un détecteur 86 qui est réalisé sous la forme d'un palpeur dont la tige est susceptible de venir en contact avec des butées disposées dans des positions parfaitement déterminées suivant la longueur du support 21, pendant le déplacement du chariot, suivant le type d'assemblage combustible à charger.

Les butées sont placées de manière que le détecteur 86 envoie un signal à une unité de commande du moteur 14a du chariot pour régler la vitesse de déplacement du chariot 14, suivant les phases de déplacement du chariot soit vers l'avant soit vers l'arrière.

En effet, certains déplacements de grande amplitude pourront être réalisés à grande vitesse, certains autres déplacements, par exemple pour réaliser la mise en place des pinces sur les bouchons d'extrémité des crayons étant réalisés à plus faible vitesse.

Après avoir effectué le chargement d'une nappe horizontale de crayons combustibles, on déplace verticalement soit vers le bas soit vers le haut, le support mcbile 21 du banc de traction pour passer d'une position de chargement d'une nappe à une autre.

Par exemple, on peut effectuer le chargement de nappes successives de crayons dans des rangées de logements de l'ossature qui peuvent se trouver à une distance variable l'une de l'autre de part et d'autre de la rangée médiane de l'assemblage.

Toutes ces opérations successives de chargement peuvent être gérées par un automate programmable.

Après avoir placé le support mobile du banc de traction au niveau voulu, on recommence les opérations décrites ci-dessus nécessaires pour effectuer le chargement d'une nappe de crayons combustibles. L'unité de programmation du dispositif de commande du bloc de sélection permet de tenir compte de la constitution de la nouvelle nappe de crayons à mettre en place dans l'ossature.

Lorsque le remplissage complet de l'ossature d'assemblage combustible 8 a été réalisé, après remontage des embouts d'extrémité, on bascule le support d'ossature en position verticale, de manière à réaliser l'évacuation de l'assemblage combustible dont le remplissage vient d'être effectué.

Lorsqu'on dispose de plusieurs lignes de chargement placées en parallèle comportant chacune un support d'ossature et au moins un magasin de stockage de crayons neufs, après remplissage d'un assemblage combustible, on peut déplacer le banc de traction latéralement en direction d'une nouvelle ligne de chargement, pendant qu'on effectue les opérations d'évacuation de l'assemblage sur la première ligne de chargement.

On évite ainsi toute perte de temps lors des opérations de chargement des assemblages combustibles.

Le support de magasin 6 peut assurer le support de plusieurs magasins 7 renfermant des crayons neufs et des moyens pour remplacer un magasin vide par un magasin plein de crayons neufs, en cours d'opération de chargement d'un assemblage combustible.

L'installation de chargement d'assemblages combustibles suivant l'invention permet de réaliser très rapidement le remplissage des ossatures d'assemblages par des crayons combustibles, sans risque de détérioration des crayons et des ossatures. En outre, la quasi totalité des opérations réalisées par l'installation de chargement peut être effectuée sans intervention manuelle.

Les déplacements des tirants et des crayons combustibles sont réalisés de manière régulière et sans vibration, du fait que la vis fixe sur laquelle est engagé l'écrou du chariot motorisé est constamment maintenue de manière efficace, par des dispositifs de maintien associés au chariot et mis en place à la partie centrale de la vis. On peut ainsi utiliser des vis de très grande longueur permettant des déplacements de grande amplitude des tirants et des crayons sans risque de fléchissement et de mise en vibration des vis.

Un des avantages importants de l'installation de chargement suivant l'invention est que cette installation peut être adaptée très rapidement pour passer d'une opération de chargement d'un premier type d'assemblages à une opération de chargement d'un assemblage de type différent, comportant par exemple un nombre différent de crayons combustibles.

En effet, le banc de traction peut être facilement adapté en remplaçant les peignes de guidage fixés sur le support mobile 21 par des peignes de guidage adaptés, en prévoyant un nombre de tirants égal au nombre maximal de crayons combustibles dans une rangée de l'ossature de l'assemblage et en fixant un bloc de sélection à l'avant du banc de traction comportant un nombre voulu de canaux et relié à une unité de commande programmée en fonction de la structure de l'assemblage.

L'invention ne se limite pas au mode de réalisation qui a été décrit.

C'est ainsi qu'on peut imaginer d'utiliser une unité de chargement ou banc de traction comportant un support d'un type différent du support décrit plus haut et un chariot associé à des moyens de déplacement également différents.

De même, les moyens de prise des crayons peuvent être différents des tirants à structure coaxiale qui ont été décrits plus haut.

Les moyens de liaison des tirants et du chariot peuvent également être réalisés d'une manière différente.

Le bloc de sélection des tirants peut présenter toute forme propre à assurer l'arrêt des tirants dans leur mouvement vers l'avant.

Il est possible de charger l'assemblage par nappes verticales successives au lieu de nappes horizontales. On peut aussi charger les crayons par groupes de crayons différents d'une nappe.

Toutes ces opérations sont gérées par un automate programmable.

L'installation suivant l'invention peut être utilisée pour effectuer le chargement de tout type d'assemblages combustibles comportant des crayons parallèles entre eux et disposés suivant un réseau.

## Revendications

1. Installation de chargement d'un assemblage combustible (8) constitué d'une ossature ménageant des logements pour un ensemble de crayons combustibles (16) dans des dispositions parallèles et suivant un réseau et comportant des tubes-guides (17) se substituant à certains crayons dans le réseau, caractérisée par le fait qu'elle comporte :
- au moins une ligne de chargement comprenant un support d'ossature (9) et un magasin de stockage (7) de crayons combustibles dans une disposition alignée suivant la direction longitudinale (5) des logements de l'ossature, et
- une unité de chargement (2) comprenant :
- un support (11) destiné à être mis en place dans la ligne de chargement, dans l'alignement longitudinal du support d'ossature (9) et du magasin de stockage (7),
- un chariot (14) monté mobile sur le support (11), dans la direction longitudinale (5),
- une pluralité de moyens de prise de crayons (45),
- des moyens de liaison (57, 68) des moyens de prise (45) des crayons (16) et du chariot (14),
- une pluralité de moyens (82, 83) commandés de manière sélective pour coopérer avec chacun des moyens de prise (45) de crayons (16) pour permettre l'entraînement du moyen de prise (45) par le chariot (14) ou la retenue du moyen de prise (45),
- une unité de sélection (75) pour l'activation sélective d'un sous-ensemble de moyens (82, 83) coopérant avec les moyens de prise (45), et
- des moyens de commande (62, 60) des moyens de prise (45) des crayons (16).

2. Installation suivant la revendication 1, caractérisée par le fait que le support (11) comporte une première partie (20) munie de moyens (23) pour sa fixation sur un plancher (19) de la ligne de chargement et une seconde partie (21) montée mobile sur la partie fixe (20) dans la direction verticale associée à un dispositif (32) de déplacement de la seconde partie mobile (21) par rapport à la première partie fixe (20), par pas d'amplitude déterminée.

3. Installation suivant la revendication 2, caractérisée par le fait que les moyens de déplacement de la partie mobile (21) du support (11) comporte un moteur d'entraînement (33), au moins deux vérins à vis (34) et au moins deux tiges de liaison (35) du moteur (33) et des vérins à vis (34).

4. Installation suivant la revendication 2, caractérisée par le fait que la première partie (20) du support (11) comporte des moyens de support (24) constitués par des patins à coussin d'air et des moyens de déplacement (25a, 25b) du support (11) au-dessus du plancher (19) de la ligne de chargement, dans une direction transversale perpendiculaire à la direction longitudinale (5).

5. Installation suivant la revendication 4, caractérisée par le fait que les moyens de déplacement (25a, 25b) du support (11) dans une direction transversale comporte un rail de guidage et une crémaillère (26) fixés dans une direction transversale dans le plancher (19) de la ligne de chargement, un pignon (27) engrènant avec la crémaillère (26), un galet (28) coopérant avec le rail transversal et des moyens d'entraînement en rotation (25b) du pignon (26) comportant une manivelle.

6. Installation suivant la revendication 2, caractérisée par le fait que la première partie (20) et la seconde partie (21) du support (11) sont réalisées sous la forme de châssis allongés rigides comportant des longerons (20a, 20b), des montants (20c, 20d), des traverses et des éléments de renforcement inclinés (20e, 20f).

7. Installation suivant l'une quelconque des revendications 1 à 6, caractérisée par le fait qu'une vis (12) est montée fixe dans la direction longitudinale (5) sur le support (11) et que le chariot (14) comporte un moteur d'entraînement (14a) d'un écrou (15) monté rotatif sur le chariot (14) en prise avec la vis (12).

8. Installation suivant la revendication 7, caractérisée par le fait que des barres de guidage (13) de direction longitudinale (5) sont montées sur le support (11) et que le chariot (14) porte des paliers de guidage (38) engagés sur les barres de guidage (13).

9. Installation suivant l'une quelconque des revendications 1 à 8, caractérisée par le fait que les moyens de prise (45) des crayons (16) sont constitués par des tirants allongés (45) comportant une partie interne constituée par une tige (49) portant à son extrémité au moins deux lames de pince (51) de prise d'un crayon combustible (16) et une partie externe sous la forme d'une gaine tubulaire (52) montée de manière coaxiale autour de la tige (49) et comportant à l'une de ses extrémités un mors (56) de serrage des lames (51) et un ressort (54) de rappel de la gaine tubulaire (52) dans la direction axiale de la tige (49), de manière à placer le mors (56) en position de serrage des lames (51).

10. Installation suivant la revendication 9, caractérisée par le fait qu'une pièce d'actionnement (60) est fixée sur la gaine tubulaire (52) de chacun des tirants (45) en saillie par rapport à sa surface externe et qu'un élément (62) est monté glissant sur le chariot (14) et associé à un moyen de déplacement dans la direction longitudinale (5) pour déplacer les gaines tubulaires (52) des tirants (45) dans la direction longitudinale, à l'encontre du ressort (54), dans le sens du desserrage des pinces (51) par poussée de l'élément glissant (62) contre l'élément (60) solidaire de la gaine tubulaire (52).

11. Installation suivant l'une quelconque des revendications 9 et 10, caractérisée par le fait que les moyens de liaison des tirants (45) traversant la gaine (52) au niveau d'une fente longitudinale (58) et du chariot (14) comportent, fixée sur la tige interne (49) de chacun des tirants (45), une plaque (57) ou drapeau de direction radiale par rapport aux tirants (45) ayant une partie en saillie à l'extérieur de la gaine (52) dans laquelle est usinée une cavité (57b) et un ensemble de tiges (68) montées coulissantes dans des ouvertures d'une partie (67) du chariot (14), à l'aplomb des tirants (45) reposant sur le support (11), chacune des tiges (68) comportant une partie d'extrémité (70) rappelée par un ressort (71) de manière à venir se loger dans la cavité (57b) de la plaque de liaison (57) ou drapeau du tirant (45) correspondant.

12. Installation suivant la revendication 11, caractérisée par le fait qu'elle comporte de plus un levier (65) portant des moyens de blocage (72) des tiges coulissantes (68), associé à au moins un vérin de manoeuvre (64), pour assurer le blocage des tiges (49) des tirants (45) par rapport aux gaines tubulaires externes (52) par commande des vérins (64).

13. Installation suivant l'une quelconque des revendications 9 à 12, caractérisé par le fait que les lames (51, 51a, 51b) des pinces de prise de chacun des tirants (45) présentent la forme de secteurs cylindriques de même axe et comportent deux lames (51a) comprenant un bec d'accrochage et deux lames de guidage (51b) de plus faible dimension dans la direction circonférentielle que les lames d'accrochage (51a).

14. Installation suivant l'une quelconque des revendications 9 à 13, caractérisée par le fait qu'elle comporte un bloc de sélection (74) disposé à une extrémité du support (11) située en vis-à-vis du support d'ossature (9) et comportant un corps (79) traversé, dans l'alignement axial de chacun des tirants (45) reposant sur le support (11), par un canal (80) dans lequel débouche une ouverture (81) de direction transversale par rapport au canal (80) dans laquelle est monté coulissant un pion de blocage (83) solidaire de la tige d'un vérin (82) pour son déplacement entre une position laissant ouvert le canal (80) et une position de fermeture du canal (80) et de blocage d'un tirant (45).

15. Installation suivant la revendication 14, caractérisée par le fait que les vérins (82) de déplacement des pions de blocage (83) du bloc de sélection (74) sont reliés à une unité de commande électrohydraulique (75) comportant un moyen de programmation pour l'activation sélective d'un sous-ensemble de vérins (82).

16. Installation suivant l'une quelconque des revendications 1 à 15, caractérisée par le fait qu'elle comporte deux dispositifs de maintien (40, 40') de la vis (12) placés de part et d'autre du chariot (14) et comportant des paliers de guidage (39) engagés sur des moyens de guidage (13) du chariot (14) et des moyens d'accrochage amovibles au chariot (14) et des butées (41) fixées sur le support (11, 21) sur le parcours du chariot (14) pour l'actionnement des moyens d'accrochage des dispositifs de maintien (40, 40') de la vis (12).

17. Installation suivant l'une quelconque des revendications 1 à 16 caractérisée par le fait que le chariot (14) comporte une barre de poussée (87) sur les moyens de liaison (57) des moyens de prise (45) et qu'un capteur d'effort (88) est intercalé entre la barre de poussée (87) et chacun des moyens de liaison (57).

18. Installation suivant l'une quelconque des revendications 1 à 17, caractérisée par le fait qu'elle comporte au moins une caméra (89, 90) de surveillance des moyens de prise (45) et des crayons combustibles lors de leur déplacement de part et d'autre du support d'ossature (9).

## Patentansprüche

1. Vorrichtung zur Ladung bzw. zum Einbringen eines Brennstabbündels (8), gebildet aus einem Tragwerk oder Gerüst, das für einen Satz von Brennstäben (16) Aufnahmen in paralleler Anordnung einem Raster nach ausbildet und das Führungsrohre (17) aufweist, die sich an die Stelle bestimmter Brennstäbe im Raster setzen, dadurch gekennzeichnet, daß sie aufweist:
- wenigstens eine Ladestrecke, die eine Gerüsthalterung (9) und ein Speichermagazin (7) von Brennstäben in einer Reihenanordnung umfasst, die der Längsrichtung (5) der Aufnahmen des Gerüsts folgen, und
- eine Ladeeinheit (2), die aufweist:
- eine Halterung (11), die dazu dient, in die Ladestrecke in Längsfluchtlinie der Gerüsthalterung (9) und des Speichermagazins (7) gestellt zu werden,
- einen auf der Halterung (11) in Längsrichtung (5) beweglich montierten Schlitten (14),
- eine Vielzahl von Greifeinrichtungen der Brennstäbe (45),
- Verbindungseinrichtungen (57, 68) der Greifeinrichtungen (45) der Brennstäbe (16) und des Schlittens (14),
- eine Vielzahl von Einrichtungen (82, 83), die selektiv betätigt werden, um mit jeder der Greifeinrichtung (45) der Brennstäbe (16) zusammenzuwirken, um die Mitnahme der Greifeinrichtung (45) durch den Schlitten (14) oder das Zurückhalten der Greifeinrichtung (45) zu ermöglichen,
- eine Auswahleinheit (75) für die selektive Aktivierung einer Untergruppe der Einrichtungen (82, 83), die mit den Greifeinrichtungen (45) zusammenwirken, und
- Steuereinrichtungen (62, 60) der Greifeinrichtungen (45) der Brennstäbe (16).

2. Vorrichtung nach Anspruch 1, dadurch gekennzeichnet, daß die Halterung (11) ein erstes Teil (20), das mit Einrichtungen (23) für seine Befestigung auf einem Boden (19) der Ladestrecke versehen ist, und ein zweites Teil (21) aufweist, das auf dem feststehenden Teil (20) in senkrechter Richtung beweglich und zugeordnet zu einer Verschiebungsvorrichtung (32) des zweiten beweglichen Teils (21) in Bezug auf den ersten feststehenden Teil (20) pro festgelegten Amplitudenschritt montiert ist.

3. Vorrichtung nach Anspruch 2, dadurch gekennzeichnet, daß die Verschiebungseinrichtungen des beweglichen Teils (21) der Halterung (11) einen Antriebsmotor (33), wenigstens zwei Schraubenwinden (34) und wenigstens zwei Verbindungsstangen (35) des Motors (33) und der Schraubenwinden (34) aufweisen.

4. Vorrichtung nach Anspruch 2, dadurch gekennzeichnet, daß das erste Teil (20) der Halterung (11) Stützeinrichtungen (24), die durch Luftkissenschuhe gebildet werden, und Verschiebungseinrichtungen (25a, 25b) der Halterung (11) oberhalb des Bodens (19) der Ladestrecke, in einer Querrichtung senkrecht zur Längsrichtung (5) aufweist.

5. Vorrichtung nach Anspruch 4, dadurch gekennzeichnet, daß die Verschiebungseinrichtungen (25a, 25b) der Halterung (11) in eine Querrichtung eine Führungsschiene und eine Zahnstange (26) unbeweglich in Querrichtung im Boden (19) der Ladestrecke, ein Ritzel (27), das in die Zahnstange (26) eingreift, eine Rolle (28), die mit der Querschiene zusammenwirkt, und Drehantriebseinrichtungen (25b) des Ritzels (26), die eine Kurbel aufweisen, aufweisen.

6. Vorrichtung nach Anspruch 2, dadurch gekennzeichnet, daß das erste Teil (20) und das zweite Teil (21) der Halterung (11) in der Form von langgestreckten, steifen Rahmen ausgeführt ist, die Längsträger (20a, 20b), Stützen (20c, 20d), Querträger und geneigte Verstärkungselemente (20e, 20f) aufweisen.

7. Vorrichtung nach einem der Ansprüche 1 bis 6, dadurch gekennzeichnet, daß eine Schraube (12) in Längsrichtung (5) unbeweglich auf der Halterung (11) montiert ist, und daß der Schlitten (14) einen Motor (14a) zum Antrieb einer Mutter (15) aufweist, die drehbar in Eingriff mit der Schraube (12) auf dem Schlitten (14) montiert ist.

8. Vorrichtung nach Anspruch 7, dadurch gekennzeichnet, daß Längsführungsstangen (13) auf der Halterung (11) montiert sind und der Schlitten (14) Führungslager (38) trägt, die mit den Führungsstangen (13) verbunden sind.

9. Vorrichtung nach einem der Ansprüche 1 bis 8, dadurch gekennzeichnet, daß die Greifeinrichtungen (45) der Brennstäbe (16) von langgestreckten Zugstangen (45) gebildet werden, die einen inneren Teil, der von einer Stange (49) gebildet wird, die an ihrem Ende wenigstens zwei Klemmzangen (51) zum Greifen eines Brennstabes (16) trägt, und einen äußeren Teil in Form einer rohrförmigen Hülle (52) aufweisen, der koaxial um die Stange (49) montiert ist und an einem der Enden einen Spannkopf (56) der Zangen (51) und eine Feder zum Rückstellen der rohrförmigen Hülle (52) in der axialer Richtung der Stange (49) aufweist, so daß sie den Kopf (56) in Schließstellung der Zangen (51) bringt.

10. Vorrichtung nach Anspruch 9, dadurch gekennzeichnet, daß ein Betätigungselement (60) auf der rohrförmigen Hülle (52) jeder Zugstange (45) gegenüber seiner äußeren Oberfläche hervorspringend befestigt ist und ein Element (62) gleitend auf dem Schlitten (14) montiert und einer Verschiebungeinrichtung in Längsrichtung (5) zugeordnet ist, um die rohrförmigen Hüllen (52) der Zugstangen (45) in Längsrichtung gegen die Feder (54) zu verschieben, in Richtung der Lösung der Zangen (51) durch Längsschub des gleitenden Elements (62) gegen das einstückig mit der rohrförmigen Hülle (52) ausgeführte Element (60).

11. Vorrichtung nach einem der Ansprüche 9 oder 10, dadurch gekennzeichnet, daß die Verbindungseinrichtungen der Zugstangen (45), die die Hülle (52) auf der Höhe eines Längsschlitzes (58) und des Schlittens (14) durchstoßen, an der inneren Stange (49) jeder Zugstange (45) befestigt, eine Platte (57) oder Fahne in radialer Richtung in Bezug auf die Zugstangen (45) aufweisen, die einen Teil hat, der ins Äußere der Hüllen (52) vorspringt und in dem eine Vertiefung (57b) eingearbeitet ist, und einen Satz von Stangen (68) aufweisen, die gleitbeweglich lotrecht zu den Zugstangen (45) in Öffnungen eines Teils (67) des Schlittens (14) montiert sind und auf der Halterung ruhen, wobei jede dieser Stangen (68) einen Endabschnitt (70) aufweist, der durch eine Feder (71) zurückgedrückt wird, so daß er in Aufnahme in die Vertiefung (57b) der Verbindungsplatte (57) oder Fahne der entsprechenden Zugstange (45) kommt.

12. Vorrichtung nach Anspruch 11, dadurch gekennzeichnet, daß sie außerdem einen Hebel (65) aufweist, der Verriegelungseinrichtungen (72) der gleitenden Stangen (68) trägt und wenigstens einem Betätigungszylinder (64) zugeordnet ist, um die Verriegelung der Stangen (49) der Zugstangen (45) gegenüber den rohrförmigen äußeren Hüllen (52) durch die Betätigung der Zylinder (64) zu gewährleisten.

13. Vorrichtung nach einem der Ansprüche 9 bis 12, dadurch gekennzeichnet, daß die Greifklemmzangen (51, 51a, 51b) jeder Zugstange (45) die Form von Zylindersektoren gleicher Achse haben und zwei Zangen (51a), die eine Mitnehmernase aufweisen, und in Umfangsrichtung zwei Führungszangen (51b) mit etwas geringeren Ausmaßen als die Mitnehmerzangen (51a) aufweisen.

14. Vorrichtung nach einem der Ansprüche 9 bis 13, dadurch gekennzeichnet, daß sie einen Auswahlblock (74) aufweist, der an einem Ende der Halterung (11) vorgesehen ist, gegenüber der Gerüsthalterung angeordnet ist und einen Körper (79) aufweist, der in axialer Ausrichtung zu jeder der Zugstangen (45), die auf der Halterung (11) ruhen, von einem Kanal (80) durchstoßen wird, in dem eine zum Kanal (80) querliegende Öffnung (81) mündet, in der gleitbeweglich ein mit der Stange eines Stellantriebs (82) einstückig ausgeführtes Verriegelungsstück (83) montiert ist, für seine Verschiebung zwischen einer den Kanal (80) offenlassenden Stellung und einer Verschließstellung des Kanals (80) und der Verriegelung einer Zugstange (45).

15. Vorrichtung nach Anspruch 14, dadurch gekennzeichnet, daß die Stellantriebe (82) zur Verschiebung der Verriegelungsstücke (83) des Auswahlblocks (74) an eine elektrohydraulische Antriebseinheit (75) angebunden sind, die Programmierungseinrichtungen für die selektive Aktivierung einer Untergruppe von Stellantrieben (82) aufweist.

16. Vorrichtung nach einem der Ansprüche 1 bis 15, dadurch gekennzeichnet, daß sie zwei Unterstützungsvorrichtungen (40, 40') der Schraube (12) aufweist, die beiderseits des Schlittens (14) angeordnet sind, und Führungslager (39), die auf die Führungseinrichtung (13) des Schlittens (14) greifen, lösbare Mitnehmereinrichtungen am Schlitten (14), und auf der Halterung (11, 21) befestigte Anschläge (41) auf der Strecke des Schlittens (14) für die Betätigung der Mitnehmereinrichtungen der Unterstützungsvorrichtungen (40, 40') der Schraube (12) aufweisen.

17. Vorrichtung nach einem der Ansprüche 1 bis 16, dadurch gekennzeichnet, daß der Schlitten (14) eine Stange (87) zum Schieben der Verbindungseinrichtungen (57) der Greifeinrichtungen (45) aufweist, und daß ein Druckaufnehmer (88) zwischen die Schubstange (87) und jeder der Verbindungseinrichtungen (57) eingefügt ist.

18. Vorrichtung nach einem der Ansprüche 1 bis 17, dadurch gekennzeichnet, daß sie wenigstens eine Kamera (89, 90) zur Überwachung der Greifeinrichtungen (45) und der Brennstäbe bei ihrer Bewegung auf beiden Seiten des Gerüsts (9) umfaßt.

## Claims

1. Loading installation for a fuel assembly (8) consisting of a framework defining housings for a set of fuel rods (16) arranged in parallel manner in a grid pattern and comprising guide tubes (17) which form substitutes for some of the rods in the grid,
characterised in that it comprises:
at least one loading line comprising a framework support (9) and a storage magazine (7) for fuel rods in an arrangement which is aligned in the longitudinal direction (5) of the housings in the framework, and
a loading unit (2) comprising :
a support (11) intended to be put into position in the loading line, longitudinally aligned with the framework support (9) and the storage magazine (7),
a carriage (14) movably mounted on the support (11), in the longitudinal direction (5),
a plurality of rod gripping means (45),
means (57, 68) for connecting the gripping means (45) for the rods (16) to the carriage (14),
a plurality of means (82, 83) selectively controlled so as to cooperate with each of the gripping means (45) for the rods (16) to allow the gripping means (45) to be driven by the carriage (14) or to allow said gripping means (45) to be held back,
a selecting unit (75) for selectively activating a sub-assembly of means (82, 83) cooperating with the gripping means (45), and
means (62, 60) for controlling the gripping means (45) for the rods (16).

2. Installation according to claim 1, characterised in that the support (11) comprises a first part (20) provided with means (23) for fixing it to a floor (19) of the loading line and a second part (21) mounted on the fixed part (20) so as to be movable in the vertical direction, associated with an apparatus (32) for moving the second movable part (21) relative to the first fixed part (20), by steps of a defined amplitude.

3. Installation according to claim 2, characterised in that the means for moving the movable part (21) of the support (11) comprise a drive motor (33), at least two screw jacks (34) and at least two rods (35) for connecting the motor (33) and the screw jacks (34).

4. Installation according to claim 2, characterised in that the first part (20) of the support (11) comprises support means (24) consisting of air-cushioned shoes and means (25a, 25b) for displacing the support (11) above the floor (19) of the loading line, in a transverse direction perpendicular to the longitudinal direction (5).

5. Installation according to claim 4, characterised in that the means (25a, 25b) for displacing the support (11) in a transverse direction comprise a guide rail and a rack (26) fixed in a transverse direction in the floor (19) of the loading line, a pinion (27) meshing with the rack (26), a roller (28) cooperating with the transverse rail and rotational drive means (25b) for the pinion (26) comprising a crank.

6. Installation according to claim 2, characterised in that the first part (20) and the second part (21) of the support (11) are constructed in the form of rigid elongate frames comprising girders (20a, 20b), uprights (20c, 20d), cross-members and inclined reinforcing elements (20e, 20f).

7. Installation according to any one of claims 1 to 6, characterised in that a screw (12) is fixedly mounted, in the longitudinal direction (5), on the support (11), and the carriage (14) comprises a drive motor (14a) for a nut (15) rotatably mounted on the carriage (14) and engaging with the screw (12).

8. Installation according to claim 7, characterised in that guide bars (13) running longitudinally (5) are mounted on the support (11), and the carriage (14) carries guide bearings (38) engaging on the guide bars (13).

9. Installation according to any one of claims 1 to 8, characterised in that the gripping means (45) for the rods (16) consist of elongated tie-rods (45) comprising an inner part consisting of a rod (49) which has at its end at least two clamping blades (51) for a fuel rod (16) and an outer part in the form of a tubular sheath (52) mounted coaxially around the rod (49) and having, at one end, a chuck (56) for gripping the blades (51) and a spring (54) for returning the tubular sheath (52) in the axial direction of the rod (49), so as to place the chuck (56) in the position for gripping the blades (51).

10. Installation according to claim 9, characterised in that an actuating member (60) is fixed to the tubular sheath (52) of each of the tie-rods (45) projecting beyond its outer surface and an element (62) is slidably mounted on the carriage (14) and associated with means for displacement in the longitudinal direction (5) in order to move the tubular sheaths (52) of the tie-rods (45) in the longitudinal direction, counter to the spring (54), in the direction of slackening the grippers (51) by thrusting the slidable element (62) counter to the element (60) which is firmly attached to the tubular sheath (52) .

11. Installation according to one of claims 9 and 10, characterised in that the means for connecting the tie-rods (45) passing through the sheath (52) level with a longitudinal slot (58) to the carriage (14) comprise, fixed to the inner rod (49) of each tie-rod (45), a plate (57) or flag extending radially with respect to the tie-rods (45), having a part projecting outside the sheath (52) in which is machined a cavity (57b) and a set of rods (68) slidably mounted in openings in a part (67) of the carriage (14), in alignment with the tie-rods (45) resting on the support (11), each of the rods (68) comprising an end portion (70) brought back by a spring (71) so as to come to rest in the cavity (57b) of the connecting plate (57) or flag of the corresponding tie-rod (45).

12. Installation according to claim 11, characterised in that it further comprises a lever (65) carrying means (72) for locking the sliding rods (68), associated with at least one manoeuvring jack (64), to ensure that the rods (49) of the tie-rods (45) are locked relative to the outer tubular sheaths (52) by controlling the jacks (64).

13. Installation according to any one of claims 9 to 12, characterised in that the blades (51, 51a, 51b) of the gripping clamps for each of the tie-rods (45) take the form of cylindrical sectors of the same axis which have two blades (51a) comprising a fastening lug and two guide blades (51b) which are smaller in the circumferential direction than the fastening lugs (51a).

14. Installation according to any of claims 9 to 13, characterised in that it comprises a selection block (74) located at one end of the support (11) situated opposite the framework support (9) and comprising a body (79) which is drilled, in axial alignment with each of the tie-rods (45) resting on the support (11), with a channel (80) into which opens an opening (81) extending transversely with respect to the channel (80), a blocking stud (83) integral with the rod of a jack (82) being slidably mounted in said opening (81) so as to move between a position which leaves the channel (80) open and a position in which the channel (80) is closed and a tie-rod (45) blocked.

15. Installation according to claim 14, characterised in that the displacement jacks (82) for the blocking studs (83) of the selection block (74) are connected to an electrohydraulic control unit (75) comprising programming means for selectively activating a subassembly of jacks (82).

16. Installation according to any one of claims 1 to 15, characterised in that it comprises two devices (40, 40') for holding the screw (12) which are placed on each side of the carriage (14) and comprise guide bearings (39) engaging on guide means (13) for the carriage (14) and removable means of attachment to the carriage (14) and abutments (41) fixed to the support (11, 21) around the periphery of the carriage (14) in order to actuate the attachment means for the devices (40, 40') for holding the screw (12).

17. Installation according to any of claims 1 to 16, characterised in that the carriage (14) comprises a thrust bar (87) acting on the connecting means (57) for the gripping means (45) and a force pick-up (88) is interposed between the thrust bar (87) and each of the connecting means (57) .

18. Installation according to any one of claims 1 to 17, characterised in that it comprises at least one camera (89, 90) for monitoring the gripping means (45) and the fuel rods as they are moved on either side of the framework support (9).
